# EUROPEAN PATENT APPLICATION

(11) **EP 4 550 917 A1**
(43) Date of publication of application: **07.05.2025**
(21) Application number: 23831045.2
(22) Date of filing: 09.06.2023
(51) Int. Cl.: H04W 72/1268, H04W 72/121, H04W 72/23, H04W 72/512, H04W 74/02, H04W 84/12

(54) **ACCESS POINT, TERMINAL, AND COMMUNICATION METHOD**

(30) Priority: 29.06.2022 JP 2022104711
(71) Applicant: Panasonic Intellectual Property Corporation of America, Torrance, CA 90504 (US)
(72) Inventor: IWAI, Takashi, Kadoma-shi, Osaka 571-0057 (JP); TAKATA, Tomofumi, Kadoma-shi, Osaka 571-0057 (JP); KANAYA, Hiroyuki, Kadoma-shi, Osaka 571-0057 (JP); URABE, Yoshio, Kadoma-shi, Osaka 571-0057 (JP); MOTOZUKA, Hiroyuki, Kadoma-shi, Osaka 571-0057 (JP)
(74) Representative: Grünecker Patent- und Rechtsanwälte PartG mbB
(86) International application number: PCT/JP2023/021596
(87) International publication number: WO 2024/004596

(57) **Abstract**

This access point comprises: a control circuit that generates, by using identification information shared by a plurality of terminals included in a terminal group, a control signal for indicating allocation of an uplink-signal transmission resource of one traffic type from among a plurality of traffic types; and a transmission circuit that transmits the control signal.

## Description

### Technical Field

The present disclosure relates to an access point, a terminal, and a communication method.

### Background Art

The Institute of Electrical and Electronics Engineers (IEEE) has been proceeding with the specification formulation of IEEE 802.11be (hereinafter, also referred to as "11be"), which is a successor to the standard IEEE 802.11ax (hereinafter, also referred to as "11ax"). For example, 11ax is also called High Efficiency (HE), and 11be is also called Extreme High Throughput (EHT). Further, discussions on the required specifications for a successor to 11be are also ongoing (see, for example, Non-Patent Literatures (hereinafter each referred to as NPL) 4). For example, the successor to 11be is also called "EHT-plus" or "beyond 11be."

### Citation List

### Non-Patent Literature

NPL 1 IEEE 802.11-22/0729r1, 802.11 GEN8 Study Group
NPL 2 IEEE 802.11-22/0734r0, Next Gen After 11be: Main Directions Proposal
NPL 3 IEEE 802.11-20/1902r0, UORA Enhancements to address RTA
NPL 4 IEEE 802.11-22/0059r0, Beyond 'be'
NPL 5 IEEE 802.11-21/1488r1, CC36 CR for Trigger frame on EHT User Info field
NPL 6 IEEE 802.11-21/0485r3, EHT TF Clarifications

### Summary of Invention

However, a method for transmitting an uplink signal in radio communication, such as a wireless LAN, has not been sufficiently studied.

Anon-limiting embodiment of the present disclosure facilitates providing an access point, a terminal, and a communication method each capable of improving the transmission efficiency of an uplink signal in radio communication.

An access point according to an embodiment of the present disclosure includes: control circuitry, which, in operation, generates a control signal indicating, using identification information common to a plurality of terminals included in a terminal group, allocation of a transmission resource for an uplink signal of one or some of a plurality of traffic types; and transmission circuitry, which, in operation, transmits the control signal.

It should be noted that general or specific embodiments may be implemented as a system, an apparatus, a method, an integrated circuit, a computer program, a storage medium, or any selective combination thereof.

According to an embodiment of the present disclosure, it is possible to improve the transmission efficiency of an uplink signal in radio communication, for example.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1 illustrates an exemplary Trigger frame;
FIG. 2 illustrates an exemplary Common Info field;
FIG. 3 illustrates an exemplary User Info field;
FIG. 4 illustrates an exemplary Special User Info field;
FIG. 5 is a block diagram illustrating a configuration example of a part of an access point (AP);
FIG. 6 is a block diagram illustrating a configuration example of a part of a terminal;
FIG. 7 is a block diagram illustrating a configuration example of an access point;
FIG. 8 illustrates exemplary terminal group information;
FIG. 9 illustrates exemplary terminal group information;
FIG. 10 illustrates an exemplary User Info field;
FIG. 11 illustrates exemplary terminal group information;
FIG. 12 illustrates exemplary terminal group information;
FIG. 13 is a block diagram illustrating a configuration example of a terminal;
FIG. 14 illustrates an example of uplink signal transmission;
FIG. 15 illustrates exemplary terminal group information;
FIG. 16 illustrates exemplary terminal group information;
FIG. 17 illustrates exemplary terminal group information;
FIG. 18 illustrates exemplary terminal group information;
FIG. 19 illustrates exemplary terminal group information;
FIG. 20 illustrates exemplary terminal group information;
FIG. 21 illustrates an exemplary indication of terminal group information;
FIG. 22 illustrates an exemplary indication of terminal group information;
FIG. 23 illustrates an exemplary operation of an AP and a terminal;
FIG. 24 illustrates an example of uplink signal transmission;
FIG. 25 illustrates an example of uplink signal transmission;
FIG. 26 illustrates an example of uplink signal transmission;
FIG. 27 is a diagram illustrating an example of generation of a Trigger frame;
FIG. 28 illustrates exemplary terminal group information; and
FIG. 29 is a block diagram illustrating an example of uplink signal transmission.

### Description of Embodiments

Hereinafter, embodiments of the present disclosure will be described in detail with reference to the accompanying drawings.

In 11be and Beyond 11be, a use case such as Gaming or Virtual Reality (VR) is assumed, and the necessity for further reduction in latency (Low latency) has been proposed (see, for example, NPL 1 or 2).

For example, NPL 3 proposes using uplink orthogonal frequency division multiple access (OFDMA) random access (UORA) for the purpose of achieving low latency. In a case where an access point (AP, also referred to as "AP STA" or "base station") does not recognize the buffer status report (BSR) of the terminal (STA, also referred to as "non-AP STA"), the access point groups a plurality of terminals and allocates a random access - resource unit (RA-RU) to the grouped plurality of terminals. Thus, for example, a terminal having data to be transmitted can transmit an uplink (UL) signal without indicating the BSR to AP in advance, which possibly reduces the delay.

For example, in a case where RA-RUs selected by a plurality of terminals overlap, the UL signals possibly collide among the plurality of terminals, and the AP may not be capable of receiving all the UL signals. In contrast, in a case where RA-RUs scheduled by AP are increased to reduce the rate of collision of UL signals, for example, the RA-RUs are possibly not used when there are few terminals with data to be transmitted, and resources are possibly wasted.

In a non-limiting embodiment of the present disclosure, an exemplary method for reducing delays by reducing UL signal collisions among a plurality of terminals without increasing resources (for example, RA-RU) that can be allocated to a group including a plurality of terminals will be described. For example, in addition to the method in which a terminal having data for which low latency is required can perform UL transmission without indicating a BSR to AP in advance, a method will be described in which UL signal collisions are reduced even in a case where there is a plurality of terminals with data for which low latency is required.

In a non-limiting embodiment of the present disclosure, a method for improving a control signal (hereinafter, referred to as "Trigger frame (TF)") that indicates the transmission of an UL signal used in 11ax and 11be is provided to achieve Low Latency of the UL signal.

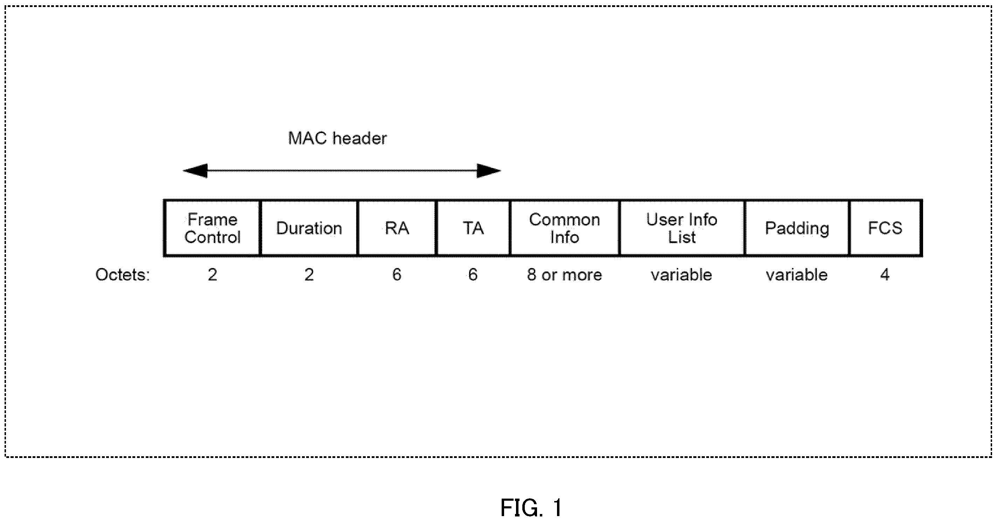

FIG. 1 illustrates an exemplary Trigger frame. As illustrated in FIG. 1, the Trigger frame includes a field (referred to as "Common Info field") that includes information common to a plurality of terminals (for example, also referred to as terminal common information) for a plurality of terminals to be frequency-multiplexed, and a field referred to as User Info List. A User Info field may include one or more fields (referred to as "User Info fields") that include information individual (or specific) to a terminal (for example, also referred to as terminal-specific information).

Further, for example, 11be may include, in the Trigger frame, a field (for example, a "Special User Info field") including information for a terminal corresponding to 11be (EHT) (not illustrated).

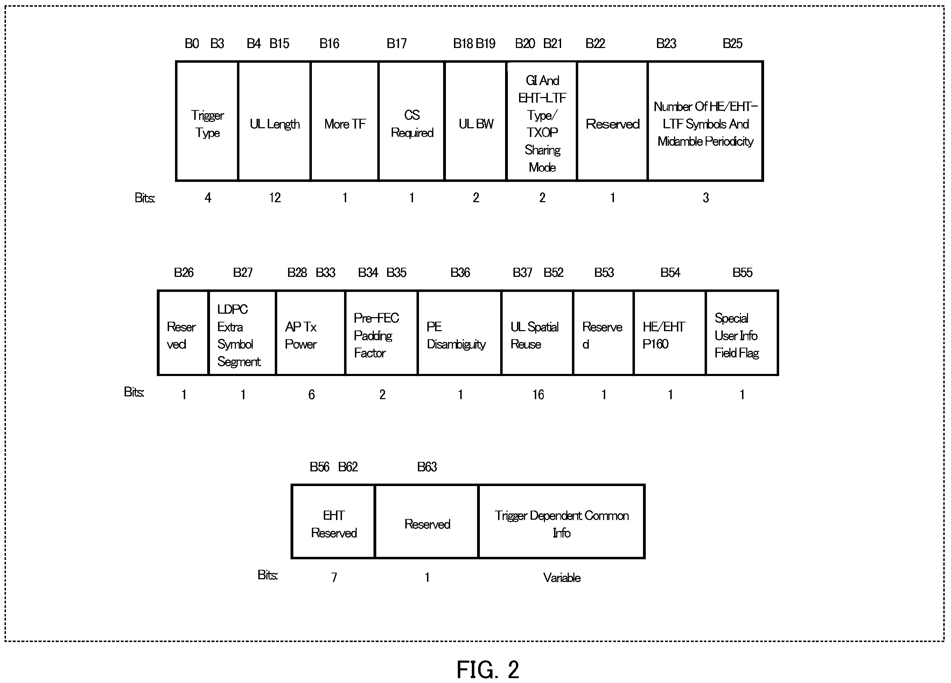

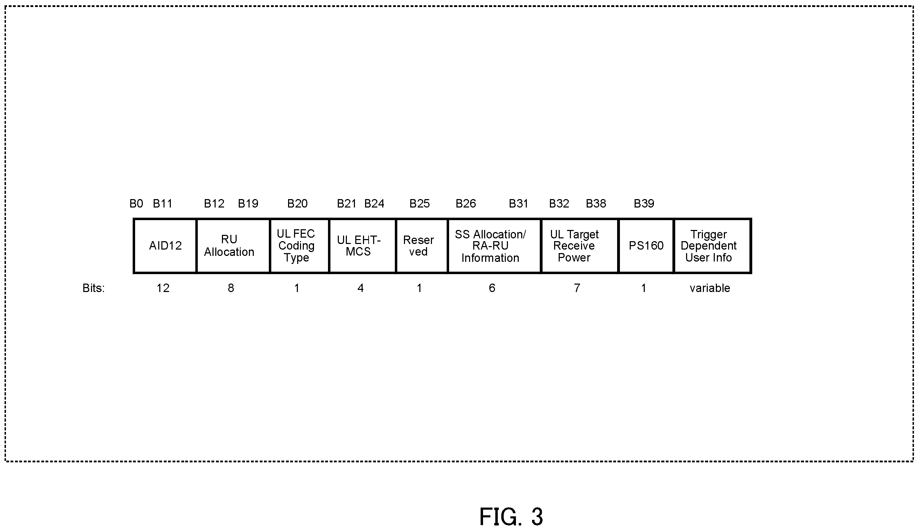

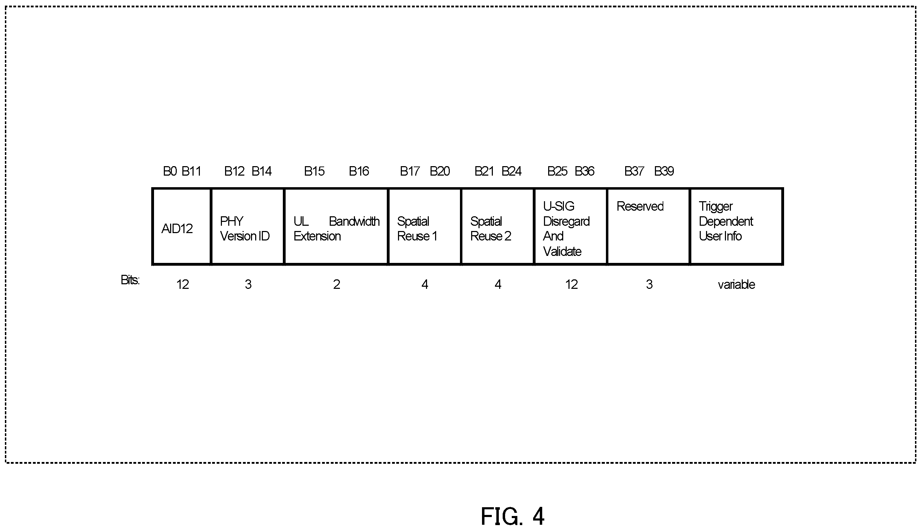

FIG. 2 illustrates an exemplary configuration of a Common Info field studied in 11be (for example, EHT) (see, for example, NPL 4). FIG. 3 illustrates an exemplary configuration of a User Info field studied in 11be (EHT) (see, for example, NPL 5). FIG. 4 illustrates an exemplary configuration of a Special User Info field (see, for example, NPL 6).

In 11ax and 11be, for example, when a terminal receives a signal (for example, physical layer (PHY) protocol data unit (PPDU)) including a Trigger frame, and the Association ID (AID) of the terminal is specified in the User Info field in the Trigger frame, the terminal transmits an UL signal (for example, trigger-based PPDU (TB-PPDU)) in the indicated resource (RU) at the transmission timing after short interframe space (SIFS) from the PPDU end timing.

For example, in a case where each of the plurality of terminals performs carrier sensing immediately before the transmission of a UL signal in a resource (for example, RA-RU) that can be allocated to a plurality of terminals, the carrier sensing results of the plurality of terminals become Idle, and thus, the UL signals of the plurality of terminals possibly collide with each other.

In the present embodiment, the scheduling of transmission RU of one or some of traffic types (for example, Low Latency Traffic) may be performed, by a Trigger frame, using a group identifier (for example, referred to as Group AID) of a group (for example, terminal group) including a plurality of terminals. Further, for example, varying the timing of transmitting a UL signal among a plurality of terminals in a terminal group can reduce collisions.

### [Configuration of Radio Communication System]

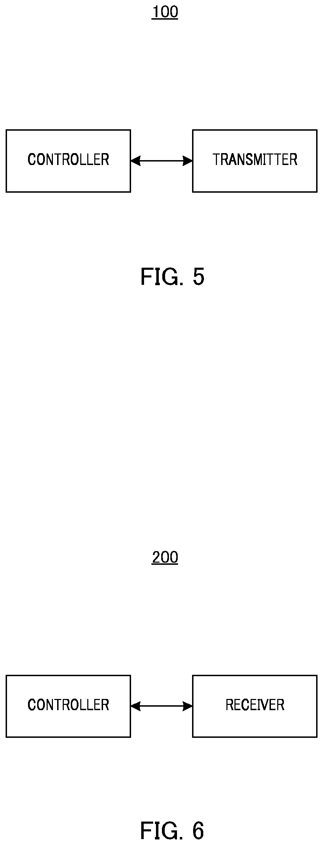

The radio communication system according to the present embodiment may include, for example, AP 100 illustrated in FIG. 5 and terminal (STA) 200 illustrated in FIG. 6. At least one of AP 100 and terminal 200 may exist two or more in a radio communication system.

AP 100, for example, groups a plurality of terminals including terminal 200 into a terminal group, and indicates, to terminal 200, terminal group information on the terminal group (for example, including an association between AID of a terminal and Group ID). Further, AP 100 transmits a Trigger frame that indicates the transmission of a UL signal limited to one or some of traffic types (for example, traffic for which low latency is required) to a terminal group including a plurality of terminals 200 defined in advance, for example.

Terminal 200 receives, for example, a Trigger frame and transmits a UL signal to AP 100 based on the radio resource (for example, transmission band (for example, RU) or signal length) and the transmission timing indicated by the received Trigger frame.

Note that the traffic for which low latency is required is also referred to as Low Latency Traffic or Latency Sensitive Traffic, for example.

FIG. 5 is a block diagram illustrating a configuration example of a part of AP 100 according to an embodiment of the present disclosure. In AP 100 illustrated in FIG. 5, a controller (corresponding to, for example, control circuitry) generates a control signal (for example, Trigger frame) that indicates, using identification information (for example, Group association ID (AID)) common to a plurality of terminals 200 included in a terminal group, the allocation of a transmission resource for an uplink signal of one or some of a plurality of traffic types. A transmitter (corresponding to, for example, transmission circuitry) transmits the control signal.

FIG. 6 is a block diagram illustrating a configuration example of a part of terminal 200 according to an embodiment of the present disclosure. In terminal 200 illustrated in FIG. 6, a receiver (corresponding to, for example, reception circuitry) receives a control signal (Trigger frame) that indicates, using identification information (Group AID) common to a plurality of terminals 200 included in a terminal group, the allocation of a transmission resource for an uplink signal of one or some of a plurality of traffic types. A controller (corresponding to, for example, control circuitry) controls uplink transmission based on the control signal.

### [Configuration Example of AP 100]

AP 100 transmits, for example, terminal group information to terminal 200 and holds the terminal group information. Further, AP 100, for example, transmits a Trigger frame to terminal 200 indicating the transmission of predetermined traffic to a terminal group including a plurality of terminals 200.

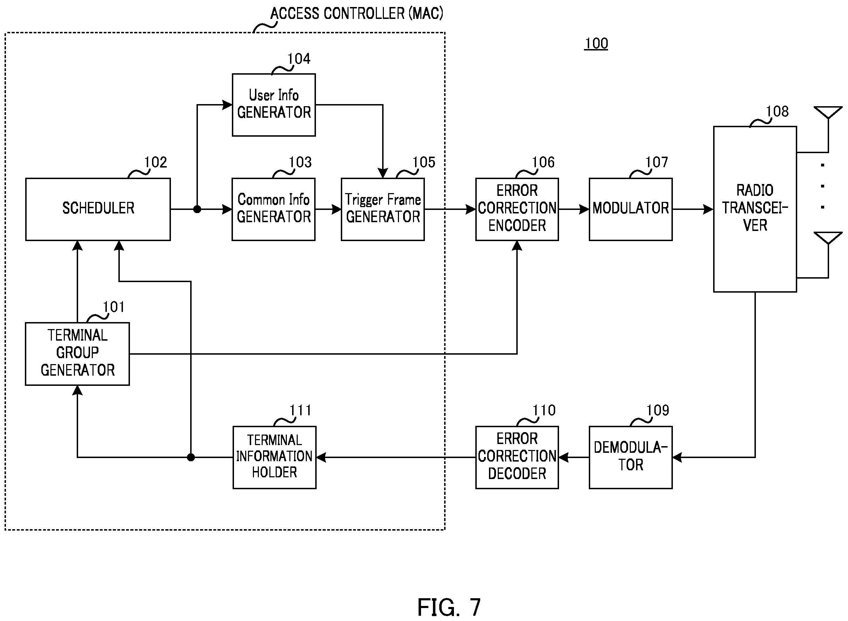

FIG. 7 is a block diagram illustrating a configuration example of AP 100. AP 100 illustrated in FIG. 7 may include, for example, terminal group generator 101, scheduler 102, Common Info generator 103, User Info generator 104, Trigger frame generator 105, error correction encoder 106, modulator 107, radio transceiver 108, demodulator 109, error correction decoder 110, and terminal information holder 111.

For example, terminal group generator 101, scheduler 102, Common Info generator 103, User Info generator 104, Trigger frame generator 105, and terminal information holder 111 may be included in an access controller (for example, Medium Access Control (MAC) processor).

Further, at least one of terminal group generator 101, scheduler 102, Common Info generator 103, User Info generator 104, Trigger frame generator 105, error correction encoder 106, modulator 107, demodulator 109, error correction decoder 110, and terminal information holder 111 illustrated in FIG. 7 may be included in, for example, the controller illustrated in FIG. 5. Further, radio transceiver 108 illustrated in FIG. 7 may be included in the transmitter illustrated in FIG. 5, for example.

For example, terminal group generator 101 generates a terminal group including a plurality of terminals 200 based on the terminal information inputted from terminal information holder 111, and outputs information on the generated terminal group (for example, terminal group information) to error correction encoder 106 and scheduler 102.

The terminal information may include, for example, Capability information of terminal 200, information on a transmission buffer state, and reception quality information. The Capability information may include, for example, information indicating whether terminal 200 supports transmission and reception of Low latency traffic. Further, the information on the transmission buffer state may include, for example, information on the size of an uplink or downlink buffer for Low latency traffic addressed to AP 100 in terminal 200 or a delay requirement (delay budget or the like). Further, the reception quality information may include, for example, a reception level of a signal, a Signal to Interference and Noise Ratio (SINR), or a path loss value measured by terminal 200.

Terminal group generator 101 may, for example, select a plurality of terminals 200 that support transmission and reception of Low latency traffic based on the Capability information, and group the plurality of terminals 200 into a terminal group.

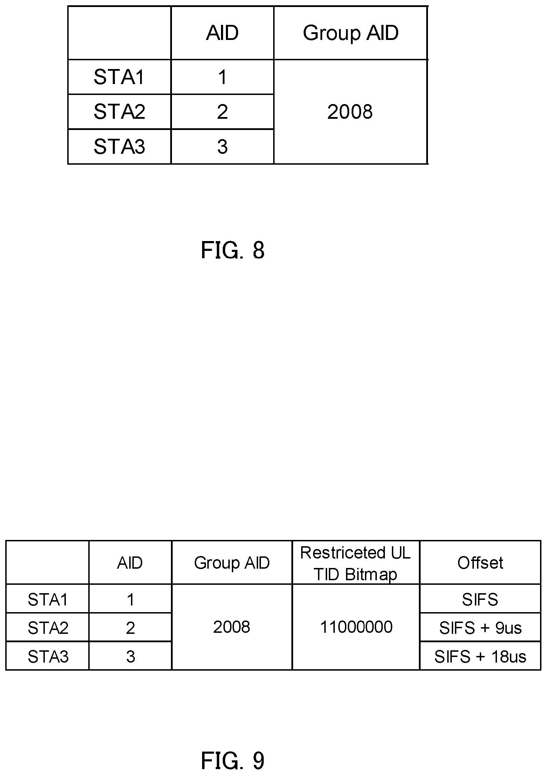

The terminal group information may include, for example, information in which at least an AID of a terminal and a group identifier (for example, Group AID) are associated with each other, as illustrated in FIG. 8.

Further, the terminal group information may be associated with, for example, at least one of traffic information (for example, Restricted UL Traffic ID (TID) Bitmap subfield) indicating a traffic type that permits terminal 200 in the terminal group to transmit a UL signal, and information on the timing of transmitting the UL signal (for example, transmission timing information), as illustrated in FIG. 9.

The traffic information for which transmission is permitted may be represented in a bitmap format as shown in FIG. 9 to indicate the transmission permission for each TID, for example. For example, as illustrated in FIG. 9, the Restricted UL TID Bitmap subfield may be represented by an 8-bit bitmap. Bits of the 8-bit bitmap may correspond to eight types of traffic (for example, TID numbers 0 to 7), respectively. For example, as illustrated in FIG. 9, when "11000000" is indicated, terminal 200 can perform UL transmission of traffic data with TID numbers 0 and 1 (first and second), and cannot perform UL transmission of traffic data corresponding to other TID numbers. For example, since TID is related to the allowable delay amount, specifying TID by the traffic information that permits transmission enables the configuration in which UL transmission in the traffic for which low latency is required is allowed and UL transmission in another traffic is not allowed.

Further, the information on the timing of transmitting a UL signal may include, for example, information on the offset of the timing of transmitting the UL signal with respect to the end timing of a PPDU including a Trigger frame.

Terminal group generator 101 holds the generated terminal group information. Note that examples of terminal group information will be described later.

Note that terminal group generator 101 may generate a terminal group based on a part of the terminal information inputted from terminal information holder 111, for example. For example, the terminal group may be defined based on the Capability information without considering the transmission buffer state and the reception quality of terminal 200.

Scheduler 102 may perform scheduling for terminal 200, for example. For example, scheduler 102 may allocate a radio resource (for example, including at least one of a transmission band and a signal length) to a terminal group including a plurality of terminals 200 based on the terminal group information inputted from terminal group generator 101 and the terminal information inputted from terminal information holder 111.

For example, the transmission band allocated to a terminal group including a plurality of terminals 200 may be configured in at least a part of the transmission band of a PPDU including a Trigger frame. Further, the transmission band may be configured (or limited) to, for example, a defined bandwidth (for example, 20 MHz × N (N is a natural number), or a natural number multiple of the bandwidth in which carrier sensing is performed). Further, in a case where AP 100 does not dynamically grasp the transmission buffer state or the reception quality of terminal 200, scheduler 102 may allocate a radio resource to a terminal group including a plurality of terminals 200 for each defined period.

Scheduler 102, for example, outputs information on a terminal group including the determined plurality of terminals 200 and the allocation information on the radio resource to Common Info generator 103 and User Info generator 104.

Common Info generator 103 may generate control information included in a Common Info field (for example, FIG. 2) common to plurality of terminals 200, for example. Common Info generator 103 may, for example, generate information of a Trigger type subfield and a CS Required subfield based on the allocation information of the radio resource inputted from scheduler 102.

The Trigger Type subfield is a subfield that indicates, for example, the type of the Trigger frame (for example, the type of signal that AP 100 causes terminal 200 to transmit). For example, AP 100 may indicate the Trigger Type of the Trigger frame indicating the allocation of a radio resource for the terminal group, as Basic. Note that the Trigger Type of the Trigger frame indicating the allocation of a radio resource to the terminal group may be another Trigger Type different from Basic (for example, Beamforming Request Poll (BFRP), multi-user block ack request (MU-BAR), multi-user request to send (MU-RTS), Buffer Status Report Poll (BSRP), Groupcast with retries multi-user block ack request (GCR MU-BAR), Bandwidth Query Report Poll (BQRP), NDP Feedback Report Poll (NFRP), or the like). For example, AP 100 may specify the Trigger Type of the Trigger frame as MU-RTS. By using MU-RTS, the indication of allocating radio resources included in the Trigger frame and the UL transmission rule of an embodiment of the present disclosure may be applied to one or more frames (for example, transmission and reception of one or more data frames or Block Ack frames performed after the Trigger frame) over a TXOP (Transmission Opportunity) period. Further, in another example, the Trigger frame may have a newly defined Trigger Type that specifies the indication of UL transmission limited to predetermined traffic (for example, Low Latency Traffic) by a terminal group.

The CS Required subfield is a subfield that indicates to terminal 200 the necessity (or need) of executing carrier sensing before the transmission of a UL signal in response to a Trigger frame, for example. For example, in a case where the value of the CS Required subfield is 0, terminal 200 is indicated not to perform carrier sensing, and in a case where the value of the CS Required subfield is 1, terminal 200 is indicated to perform carrier sensing. In a case where the execution of carrier sensing is indicated (in a case where the CS Required subfield value = 1), terminal 200 executes the carrier sensing before UL transmission, transmits the UL signal when the result of the carrier sensing is Idle, and cancels the UL signal transmission when the result of the carrier sensing is Busy. AP 100 may configure the CS Required subfield to indicate the execution of carrier sensing before UL transmission to the terminal group (that is, CS Required subfield value = 1), for example.

Common Info generator 103 may output information on the generated Common Info field to Trigger frame generator 105.

The term "configuration" of a field (e.g., subfield) in a Trigger frame may be replaced with another term such as "definition" or "interpretation," for example.

User Info generator 104 may generate, for example, control information included in a Special User Info field or a User Info field individual to terminal 200. User Info generator 104 may generate, for example, information on a Special User Info field or a User Info field individual to terminal 200 based on a defined format, as illustrated in FIGS. 3 and 4, and may generate information on a User Info List including a User Info field for each of a plurality of terminals 200. User Info generator 104 may output the information on the User Info List to Trigger frame generator 105, for example.

Further, User Info generator 104 may generate a User Info List by arranging, for example, a plurality of User Info fields in a defined order according to the type of allocation RU. For example, User Info generator 104 may generate a User Info List by prioritizing (e.g., arranging in an earlier order) a User Info field indicating at least one of allocation RU limited to predetermined traffic and allocation RU for a terminal group over a User Info field indicating another allocation RU.

Further, an AID12 subfield in the User Info field may include an identifier of a terminal group including terminal 200 (for example, Group AID illustrated in FIGS. 8 and 9). User Info generator 104 may generate, for example, an RU Allocation subfield based on the allocation information of the radio resource inputted from scheduler 102.

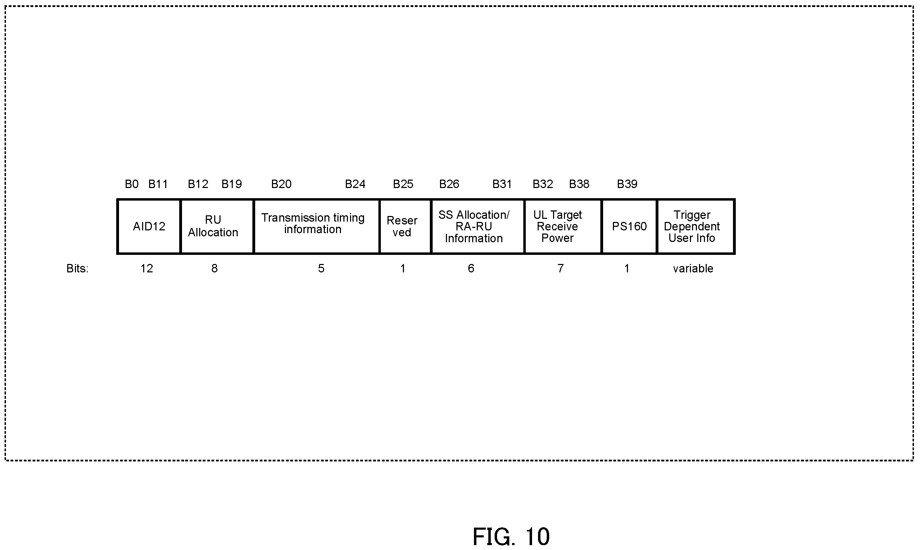

Further, the format of the User Info field may be changed (or switched, configured) depending on the value of the AID12 subfield (for example, whether the value is a terminal group identifier or not). For example, the format of the User Info field corresponding to the Group AID of the terminal group and the format of the User Info field corresponding to the AID individual to terminal 200 may be different from each other. For example, when the value of the AID12 subfield indicates an AID individual to a certain terminal, the format illustrated in FIG. 3 may be applied. Further, for example, when the value of the AID12 subfield indicates the Group AID of a terminal group, the format illustrated in FIG. 10 may be applied.

Further, in a case where the value of the AID12 subfield indicates a terminal group, for example, information not included in the terminal group information (for example, MCS information or information on traffic for which transmission is permitted) may be indicated to terminal 200 by the Trigger frame.

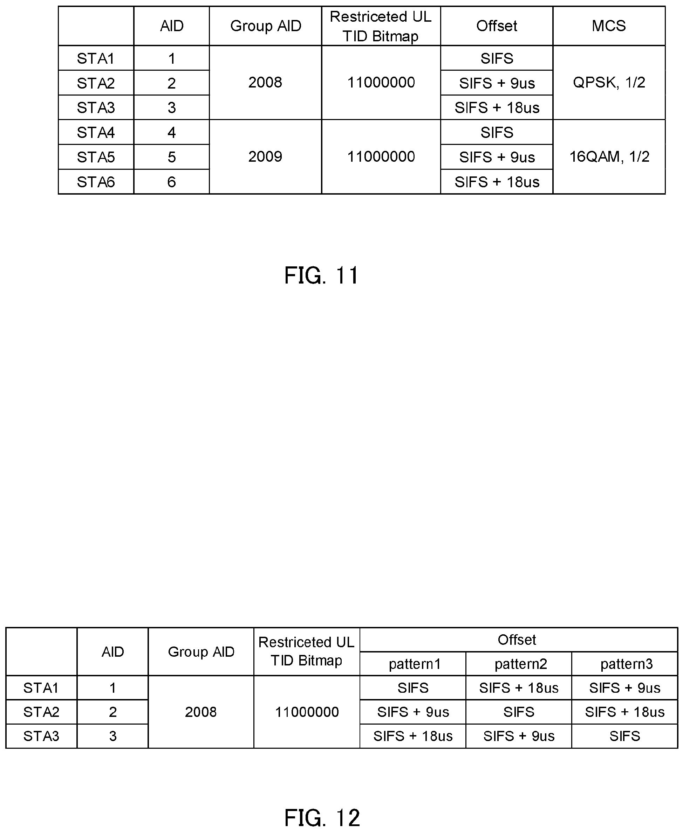

For example, the bit positions (for example, B20-B24) of the "UL FEC Coding Type subfield" and the "UL EHT-MCS subfield" indicating information on the Modulation and Coding Scheme (MCS) of the UL signal in the format of the User Info field illustrated in FIG. 3 may be changed to the "Transmission timing information subfield" indicating the transmission timing information of the UL signal in the format of the User Info field illustrated in FIG. 10. Further, for example, as illustrated in FIG. 11, the MCS used for each terminal group (for example, Group AID) may be defined in the terminal group information and may be indicated to terminal 200 in advance. Thus, in a case where a terminal group is specified, terminal 200 configures the MCS included in the terminal group information, so that the UL FEC Coding Type subfield and the UL EHT-MCS subfield are not necessary in the Trigger frame, and the transmission timing information of the UL signal can be included in the bit positions of these subfields.

Note that, as the transmission timing information of the UL signal, one timing (for example, offset) may be configured for each of a plurality of terminals 200 (for example, STA1 to STA3 and STA4 to STA6) in the terminal group, as illustrated in FIG. 11. Alternatively, as the transmission timing information of the UL signal, a plurality of timing candidates (for example, offset patterns) may be configured for each of a plurality of terminals 200 (for example, STA1, STA2, and STA3) in the terminal group, as illustrated in FIG. 12. For example, in FIG. 12, pattern numbers (pattern 1 to 3) for the offset for each terminal 200 constituting the terminal group is configured. Thus, AP 100 can dynamically indicate the transmission timing information (for example, any one of a plurality of pattern numbers) of each terminal 200 by the Trigger frame, thereby enhancing the fairness of UL transmission opportunities among terminals 200.

The information on the band allocated to the terminal group including terminal 200 (for example, the size of the transmission resource indicated by the RU allocation subfield) may be, for example, configured (for example, limited) to a frequency resource position of 20 MHz × N (for example, an integer multiple of 20 MHz) allocated to terminal 200. For example, as a method for indicating a frequency resource position of 20 MHz × N, a method for indicating a frequency resource of a clear to send (CTS) frame by a multi-user request to send (MU-RTS) used in 11ax may be applied.

In addition, when a frequency resource position for communication in an allocated period is indicated in an Operation band including 320 MHz, which is newly supported in 11be, a "UL Bandwidth Extension subfield" included in the Special User Info field illustrated in FIG. 4 may be used, for example. For example, the combination of the UL BW subfield in the Common Info field and the UL Bandwidth Extension subfield in the Special User Info field may indicate the Operation bandwidth to terminal 200.

Note that the Special User Info field may include control information for terminal 200 and a terminal group including terminal 200.

User Info generator 104 may, for example, output information on the generated User Info List to Trigger frame generator 105.

Trigger frame generator 105 may generate a Trigger frame including information of a Common Info field inputted from Common Info generator 103 and information of a User Info List (for example, Special User Info field and at least one User Info field) inputted from User Info generator 104, based on the format illustrated in FIG. 1, for example. The Trigger frame may include, for example, at least one of a MAC header, Padding, and a frame check sequence (FCS), in addition to the Common Info field and the User Info List. Trigger frame generator 105 may, for example, output the generated Trigger frame to error correction encoder 106.

Error correction encoder 106 performs error correction encoding on a transmission data signal including, for example, terminal group information inputted from terminal group generator 101 or a transmission data signal including a Trigger frame inputted from Trigger frame generator 105, and outputs the encoded signal to modulator 107. The transmission order of the terminal group information and the Trigger frame may be as follows. For example, AP 100 indicates the terminal group information to terminal 200 first. Then, AP 100 indicates to terminal 200 the Trigger frame that indicates UL transmission to the terminal group.

Modulator 107, for example, performs modulation processing on the signal inputted from error correction encoder 106, and outputs the modulated signal to radio transceiver 108.

Note that, in a case where the modulated data signal is an orthogonal frequency division multiplexing (OFDM) signal, AP 100 (for example, modulator 107) may form the OFDM signal by mapping the modulated signal to a defined frequency resource, performing inverse fast Fourier transform (IFFT) processing to convert the signal into a time waveform, and adding a cyclic prefix (CP).

Radio transceiver 108 performs radio transmission processing, such as D/A conversion and up-conversion to a carrier frequency, on the modulated signal inputted from modulator 107, and transmits the signal after the radio transmission processing to terminal 200 via an antenna. Further, radio transceiver 108 receives a signal transmitted from, for example, terminal 200 via an antenna, performs radio reception processing such as down-conversion to a baseband and A/D conversion on the received signal, and outputs the signal after the radio reception processing to demodulator 109.

Demodulator 109 performs, for example, demodulation processing on the signal inputted from radio transceiver 108, and outputs the demodulated signal to error correction decoder 110. Note that, in a case where the signal inputted to demodulator 109 is an OFDM signal, AP 100 (for example, demodulator 109) may perform CP removal processing and fast Fourier transform (FFT) processing.

Error correction decoder 110, for example, decodes the signal inputted from demodulator 109 to obtain the received data signal from terminal 200. Error correction decoder 110 outputs the decoded data including the terminal information to terminal information holder 111 in a case where the terminal information described above is included in the received data after decoding, for example.

Terminal information holder 111 may acquire (or hold), for example, terminal information (for example, Capability information of terminal 200, transmission buffer state, and information on reception quality may be included) from the decoded data inputted from error correction decoder 110, and may output the acquired terminal information to terminal group generator 101 and scheduler 102.

### [Configuration example of Terminal 200]

Terminal 200 receives, for example, terminal group information from AP 100 and holds the terminal group information. Further, terminal 200 receives a Trigger frame for scheduling an RU for Low latency Traffic transmission using, for example, a group identifier (for example, Group AID) of a terminal group, and transmits a UL signal to AP 100 in response to the Trigger frame.

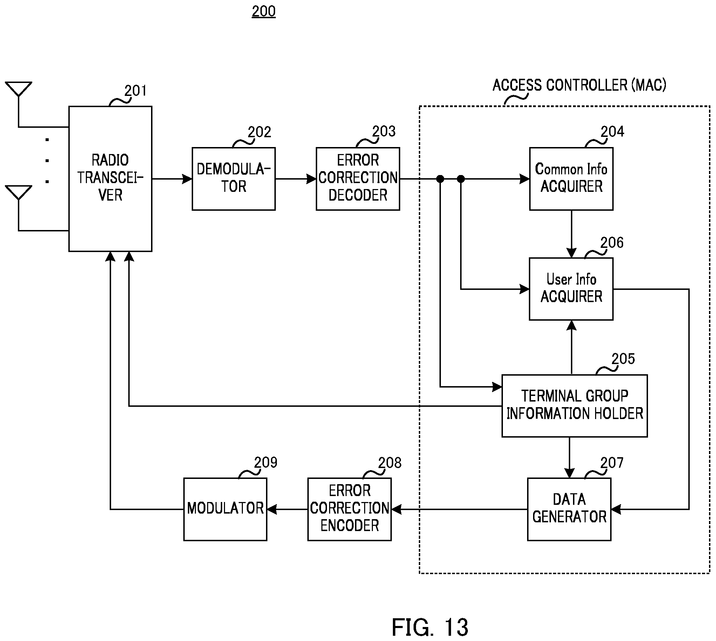

FIG. 13 is a block diagram illustrating a configuration example of terminal 200. Terminal 200 illustrated in FIG. 13 may include, for example, radio transceiver 201, demodulator 202, error correction decoder 203, Common Info acquirer 204, terminal group information holder 205, User Info acquirer 206, data generator 207, error correction encoder 208, and modulator 209.

For example, at least one of Common Info acquirer 204, Terminal group information holder 205, User Info acquirer 206, and Data generator 207 may be included in an access controller (for example, MAC processor).

Further, at least one of demodulator 202, error correction decoder 203, Common Info acquirer 204, terminal group information holder 205, User Info acquirer 206, data generator 207, error correction encoder 208, and modulator 209 illustrated in FIG. 13 may be included in, for example, the controller illustrated in FIG. 6. Further, radio transceiver 201 illustrated in FIG. 13 may be included in, for example, the receiver illustrated in FIG. 6.

Radio transceiver 201, for example, receives a reception signal via an antenna and performs, on the received signal, radio reception processing such as down-conversion and/or A/D conversion, and outputs the signal after the radio reception processing to demodulator 202.

Additionally, radio transceiver 201 performs radio transmission processing such as up-conversion and/or D/A conversion on a signal inputted from modulator 209, and transmits the signal after the radio transmission processing via an antenna. For example, radio transceiver 201 may determine the transmission timing based on information (for example, information on the transmission timing) inputted from terminal group information holder 205, and may transmit a signal from the antenna in accordance with the determined transmission timing.

Demodulator 202, for example, performs demodulation processing on the received data inputted from radio transceiver 201, and outputs the demodulated signal to error correction decoder 203. Note that, when the signal inputted to demodulator 202 is an OFDM signal, terminal 200 (e.g., demodulator 202) may perform CP removal processing and FFT processing.

Error correction decoder 203 may, for example, decode the demodulated signal inputted from demodulator 202 and output the decoded signal as a received data signal. Further, error correction decoder 203, for example, outputs a Trigger frame in the received data signal to Common Info acquirer 204 and User Info acquirer 206. Further, error correction decoder 203 outputs, for example, a frame including terminal group information in the received data signal to terminal group information holder 205.

Common Info acquirer 204 may, for example, extract information corresponding to a Common Info field from the Trigger frame inputted from error correction decoder 203, and acquire terminal common information.

The terminal common information may include, for example, information on a channel allocated to terminal 200. Note that information on a period allocated to terminal 200 may be included as terminal common information. Further, the terminal common information may include, for example, a Trigger Type subfield and a CS Required subfield. In a case where the value of the Trigger Type subfield corresponds to a type that indicates UL transmission by a terminal group limited to predetermined traffic (for example, Low Latency Traffic), terminal 200 may change the interpretation of the format of the User Info field from the format of the Basic type. Further, in a case where the CS Required subfield value is 1, terminal 200 executes carrier sensing before UL transmission. The period for executing carrier sensing is, for example, a period from the end timing of a PPDU including a Trigger frame to a predetermined UL transmission timing indicated in advance by AP 100 (or indicated in the Trigger frame).

Common Info acquirer 204 may output the extracted terminal common information to User Info acquirer 206.

Terminal group information holder 205, for example, acquires and holds the terminal group information from a frame including the terminal group information inputted from error correction decoder 203. The terminal group information may include, for example, information in which at least a terminal AID and a terminal group identifier (for example, Group AID) are associated with each other, as illustrated in FIGS. 8, 9, 11, or 12. Further, transmission timing information (Offset) of each terminal 200 in the terminal group may be associated with the terminal group information, for example. For example, terminal group information holder 205 may output the held information to User Info acquirer 206, data generator 207, and radio transceiver 201.

User Info acquirer 206 may, for example, extract information corresponding to a User Info List (for example, at least one User Info field and a Special User Info field) from the Trigger frame inputted from error correction decoder 203, and may perform processing of receiving the User Info field based on the terminal common information (for example, including Trigger Type) inputted from Common Info acquirer 204 and the information inputted from terminal group information holder 205.

For example, User Info acquirer 206 determines the presence or absence of UL transmission indication to a terminal group including terminal 200, by comparing the terminal identification information (for example, AID12 subfield) included in the User Info field and the terminal group identifier (for example, Group AID) inputted from terminal group information holder 205 with each other. User Info acquirer 206 may identify the format of the User Info field depending on the presence or absence of UL transmission indication to the terminal group. Then, User Info acquirer 206 acquires terminal-specific information (for example, information on allocation of a radio resource, transmission power information, UL signal length, and/or the like) from the User Info field. Note that the signal length of the UL signal may be determined based on, for example, the time length indicated in the UL Length subfield of the Trigger frame.

User Info acquirer 206 may output, for example, the terminal-specific information and terminal common information to data generator 207.

Data generator 207 acquires traffic information for which UL transmission is permitted based on the information inputted from terminal group information holder 205 and the information inputted from User Info acquirer 206, for example. Data generator 207 performs data generation processing, for example, in a case where traffic data permitted by AP 100 is held. On the other hand, in a case where the traffic data permitted by AP 100 is not held, data generator 207 may stop the subsequent processing (for example, not transmit UL signal) in data generator 207.

For example, when data generator 207 executes data generation, data generator 207 outputs the generated data signal (for example, UL signal to AP 100) to error correction encoder 208. The UL signal may be, for example, a response signal to a Trigger frame and may be generated in a TB-PPDU format.

Error correction encoder 208 performs error correction encoding on the data signal inputted from data generator 207, and outputs the encoded signal to modulator 209. Note that the encoding rate for the data signal may be determined depending on, for example, the terminal-specific information inputted from User Info acquirer 206.

Modulator 209 modulates the signal inputted from error correction encoder 208, and outputs the modulation signal to radio transceiver 201. Note that the modulation scheme applied in modulator 209 may be determined depending on the terminal-specific information inputted from User Info acquirer 206, for example. Further, in a case where the modulation signal is an OFDM signal, terminal 200 (for example, modulator 209) may form an OFDM signal by mapping the modulation signal to a frequency resource, performing the IFFT processing, and adding a CP.

Note that, in a case where the transmission timing information is not included in the terminal group information and is indicated by the Trigger frame of the format illustrated in FIG. 10 (for example, Transmission timing information subfield), terminal 200 may acquire the transmission timing information from, for example, User Info acquirer 206 (not illustrated), and may transmit a signal from the antenna in accordance with the transmission timing indicated in the transmission timing information.

### [Operation Examples of AP 100 and Terminal 200]

Next, operation examples of AP 100 and terminal 200 according to the present embodiment will be described.

AP 100 generates terminal group information and indicates the generated terminal group information to a plurality of terminals 200 (for example, Non-AP terminals) included in the terminal group. Further, AP 100, for example, indicates UL transmission at a predetermined transmission timing to one or more terminals 200, using a Trigger frame including terminal group information shared with terminal 200.

According to the present embodiment, AP 100 can, for example, allocate the same radio resource (for example, RA-RU) to a plurality of terminals 200, permit UL transmission for terminal 200 that holds Low Latency Traffic, and prohibit UL transmission for terminal 200 that does not hold Low Latency Traffic. Thus, for example, terminal 200 can transmit a UL signal without transmitting an indication of the transmission buffer (request for transmission resource) from terminal 200 to AP 100, thereby reducing the delay.

Further, for example, even in a case where a plurality of terminals 200 that hold Low Latency Traffic are present, the collision of UL signals can be reduced by varying the transmission timings among terminals 200 in the terminal group, and, for example, AP 100 can receive a signal from one terminal 200.

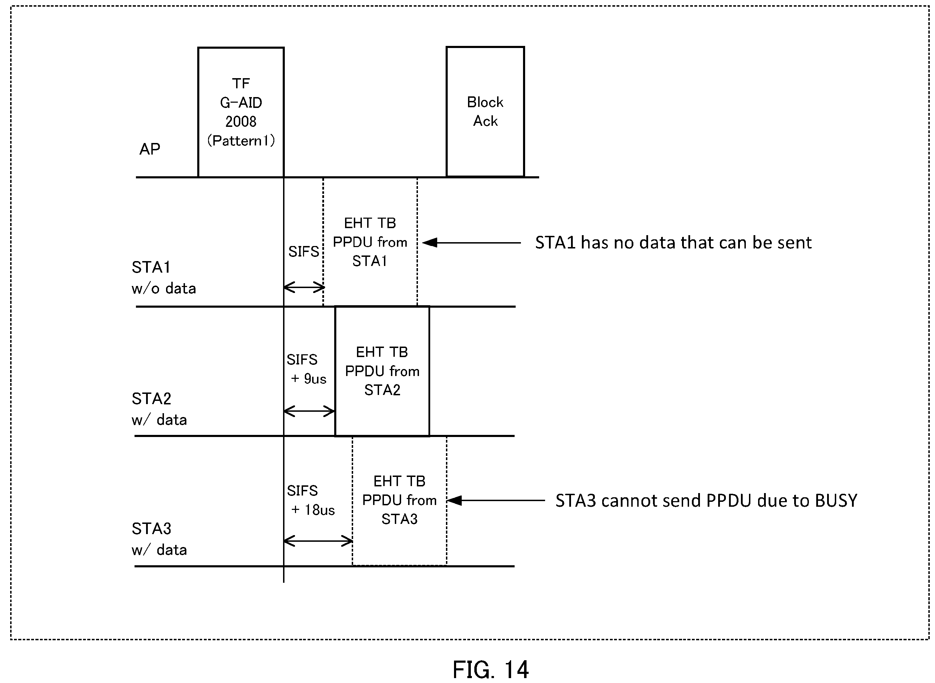

FIG. 14 illustrates exemplary operations of AP 100 and terminal 200 according to the present embodiment. In the example illustrated in FIG. 14, AP 100 indicates UL transmission to three terminals 200 (STA1, STA2, and STA3). Further, AP 100 generates, for example, terminal group information (Group AID = 2008) illustrated in FIG. 9 and indicates the information to a plurality of terminals 200 in advance. Each of STA1, STA2, and STA3 illustrated in FIG. 14 is configured with Group AID=2008, which is common to the plurality of terminals 200 included in the terminal group.

FIG. 14 illustrates an example in which the traffic information (for example, Restricted UL TID Bitmap subfield) for which transmission is permitted includes Low latency Traffic.

In FIG. 14, STA1 does not hold Low Latency Traffic. Thus, STA1 determines that the transmission of a UL signal is not permitted based on the Restricted UL TID Bitmap, and does not transmit the UL signal.

Further, in FIG. 14, STA2 holds Low Latency Traffic. Thus, STA2 determines that the transmission of a UL signal is permitted based on the Restricted UL TID Bitmap. Further, STA2 uses a transmission timing (Offset = SIFS + 9us) defined (or specified) for STA2 in the terminal group information illustrated in FIG. 9. In FIG. 14, the result of the carrier sensing until the transmission timing is Idle, and thus STA2 transmits the UL signal.

Further, in FIG. 14, STA3 holds Low Latency Traffic. Thus, STA3 determines that the transmission of a UL signal is permitted based on the Restricted UL TID Bitmap. Further, STA3 uses a transmission timing (Offset = SIFS + 18us) defined for STA3 in the terminal group information illustrated in FIG. 9. In FIG. 14, the result of the carrier sensing is Busy due to the detection of the signal from STA2 by the carrier sensing until the transmission timing, and thus STA3 does not transmit the UL signal.

As illustrated in FIG. 14, in the resource allocated to a plurality of terminals 200, the transmission for one or some of (defined) traffic types (for example, Low latency Traffic) among the plurality of traffic types is permitted, and the transmission for other traffic types is not permitted. Thus, in the resource allocated to a plurality of terminals 200, the traffic type of the signal to be UL-transmitted is limited, thereby reducing the collision of UL signals among terminals 200.

Further, even in a case where a plurality of terminals 200 that hold a UL signal of the defined traffic type is present, the timing of transmitting the UL signal configured for each terminals 200 is different. This makes it possible to reduce the collision of UL signals with Low Latency Traffic among terminals 200 in the resource allocated to a plurality of terminals 200.

Note that the allocation resource size (for example, transmission resource size of UL signal) may be set to 20 MHz × N (for example, integer multiple of 20 MHz). In this case, since terminal 200 can transmit signals in a wide band, the UL signal length (for example, the time length of PPDU) can be shortened, and the delay can be reduced. Further, by setting the allocation resource to 20 MHz × N, an embodiment of the present disclosure can be applied without changing the specification of carrier sense in 20 MHz units defined in the existing standard (for example, such as 11ax, 11be).

Further, the allocation resource size may be set to 20 MHz or less. In this case, terminal 200 may execute carrier sensing before UL transmission in the transmission RU, and need not execute carrier sensing in an RU different from the transmission RU. Thus, in a case where the allocation resource is 20 MHz or less, for example, UL signals with different transmission timings can be frequency-multiplexed in a 20 MHz band.

Hereinafter, a method for configuring terminal group information, a method for indicating terminal group information to terminal 200, a method for generating a Trigger frame, and a UL transmission method will be described.

### [Configuration Example of Terminal Group Information]

As described above, the terminal group information may include, for example, information indicating a correspondence between at least an AID for each terminal and a group identifier (for example, Group AID), as illustrated in FIG. 8.

Further, in the terminal group information, for example, as illustrated in FIG. 11, at least one of traffic information (for example, Restricted UL TID Bitmap subfield) indicating one or some of the traffic types that permit transmission, transmission timing information of a UL signal (for example, Offset subfield), and MCS information (for example, MCS subfield) may be configured (or may be associated).

AP 100 may, for example, extract terminals 200 that support transmission and reception of Low latency traffic based on the Capability information of terminal 200, and group the extracted terminals into a terminal group. Further, AP 100 may, for example, extract terminals 200 that hold an uplink or downlink buffer of Low latency traffic among terminals 200 of which Capability supports transmission and reception of Low latency traffic, and group the extracted terminals into a terminal group. Note that the uplink/downlink buffer state of Low latency traffic for terminal 200 may be indicated to AP 100, for example, by terminal 200 reporting each traffic size including the delay requirement to AP 100 using BSR.

Note that the Capability information related to Low Latency Traffic for terminal 200 may be indicated to AP 100, for example, by being included in the Capability information in the Association Request frame. AP100 can, for example, identify (or grasp) the Capability of a terminal from an Association Request frame and generate terminal group information.

Further, terminal 200 may determine whether to respond to the Trigger frame based on the Capability of terminal 200, for example. For example, when terminal 200 that does not support the transmission and reception of Low Latency Traffic detects a Trigger Type that specifies the indication of UL transmission by a terminal group limited to predetermined traffic, terminal 200 may stop the UL transmission processing including the subsequent decoding processing for the Trigger frame.

Further, for the terminal group number (for example, Group AID), for example, the Reserved bit of the AID12 subfield (for example, any of 2008 to 2044 and 2047 to 4094) may be used, as illustrated in FIGS. 8, 9, 11, and 12.

Alternatively, for the terminal group number, an AID (for example, any of 1 to 2007) used for an Associated STA may be used instead of the Reserved bit of the AID12 subfield, for example. In a case where the AID used for the Associated STA is used as the terminal group number, AP 100 does not use the AID used as the terminal group number as an individual AID for each terminal 200 (hereinafter, referred to as individual AID), for terminal 200 supporting beyond 11be (for example, beyond 11be terminal). Note that, as will be described later, AP 100 may use an AID used as a terminal group number for beyond 11be terminal, as an individual AID for a terminal that does not have a function of acquiring terminal group information (for example, terminal of existing standard).

Further, the terminal group number may be configured in an AID indicating an RA-RU to a plurality of terminals 200 (for example, 0, 2045), for example. For example, AID=0 may be configured for a terminal group of terminals 200 already connected to AP 100 (Associated STA), and AID=2045 may be configured for a terminal group of terminals 200 not connected to AP 100 (Unassociated STA). In a case where an RA-RU is allocated and an UL signal for Low Latency traffic is indicated, terminal 200 may transmit the UL signal at a predetermined transmission timing without considering the OBO (OFDMA random access backoff) used in the existing Random access (for example, terminal 200 may always operate as OBO = 0), for example.

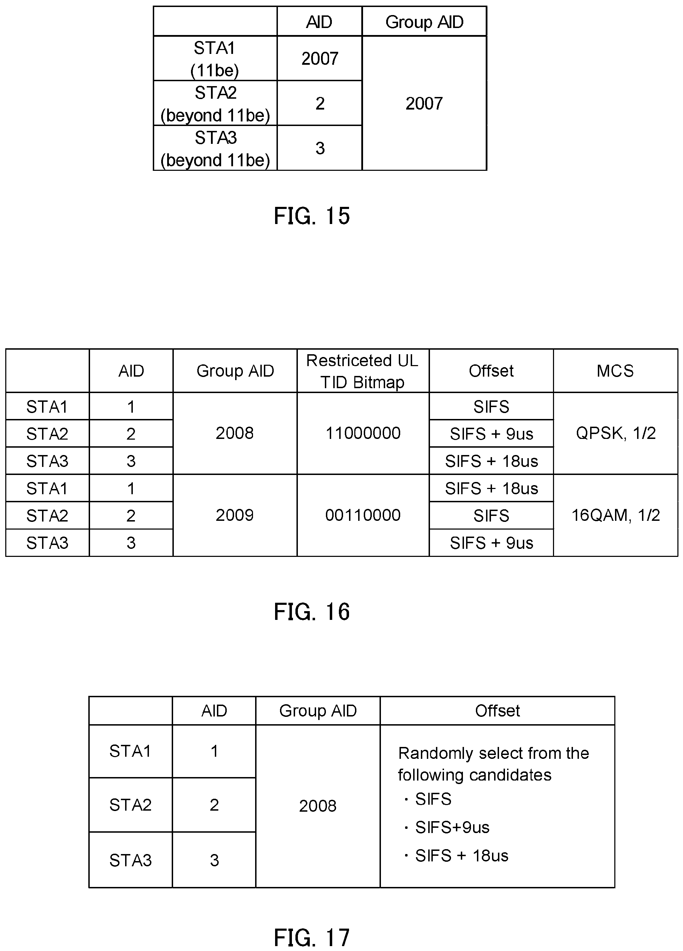

Further, for example, a terminal that supports only the existing standard (for example, 11ax, 11be) and a beyond 11be terminal that supports a standard (for example, Beyond 11be) supporting the operation according to the present embodiment may be included in the same terminal group. For example, as illustrated in FIG. 15, AP 100 may configure an AID (for example, AID = 2007) that is configured as a Group AID for a beyond 11be terminal, as an individual AID for a terminal (for example, terminal supporting 11be, STA1 in FIG. 15) that does not have a function of acquiring terminal group information. Thus, AP 100 can schedule a common RU for a terminal that does not support beyond 11be and a beyond 11be terminal with one AID.

In this case, the Beyond 11be terminal may transmit a UL signal with a transmission timing delayed by a configured offset from SIFS (for example, SIFS + 9us). On the other hand, the transmission timing of a terminal that supports only the existing standard does not support the operation of the present embodiment, and thus, the timing of transmitting the UL signal is fixed to SIFS. Accordingly, for example, in a case where a terminal that supports only the existing standard does not transmit a UL signal, the transmission of a UL signal by a Beyond 11be terminal is possible by the carrier sensing of the Beyond 11be terminal, which makes it possible to avoid a collision of UL signals and to effectively utilize radio resources.

Further, a plurality of Group AIDs may be defined (specified or configured) for one terminal 200. For example, as illustrated in FIG. 16, a plurality of Group AIDs (for example, 2008 and 2009) may be defined for one terminal 200 (for example, each of STA1, STA2, and STA3). For example, as illustrated in FIG. 16, different traffic information, different transmission timing information, or different MCS information may be associated with each Group AID. Thus, AP 100 can, for example, flexibly change the traffic type for UL transmission, the transmission timing for determining the priority of each terminal 200, or the MCS, by the Group AID included in the Trigger frame for the same terminal 200, and can indicate the transmission of the UL signal.

Further, the UL transmission timing is not limited to being individually configured for each terminal 200 in the terminal group as in FIGS. 11, 12, and 16. For example, a plurality of UL transmission timings (candidates for the transmission timing) is configured in the terminal group information, and a transmission timing may be randomly selected for each terminal 200 from the plurality of candidates. Terminal 200 may, for example, randomly select (or apply) and use one transmission timing from a plurality of transmission timings (transmission timing candidates). For example, as illustrated in FIG. 17, a plurality of transmission timings (for example, SIFS, SIFS + 9us, and SIFS + 18us) that are selectable by terminal 200 may be defined in the terminal group information. Terminal 200, for example, randomly selects and uses one transmission timing from a plurality of transmission timings defined in terminal group information, thereby equalizing the priority of transmission data among a plurality of terminals 200 and enhancing fairness among terminals 200.

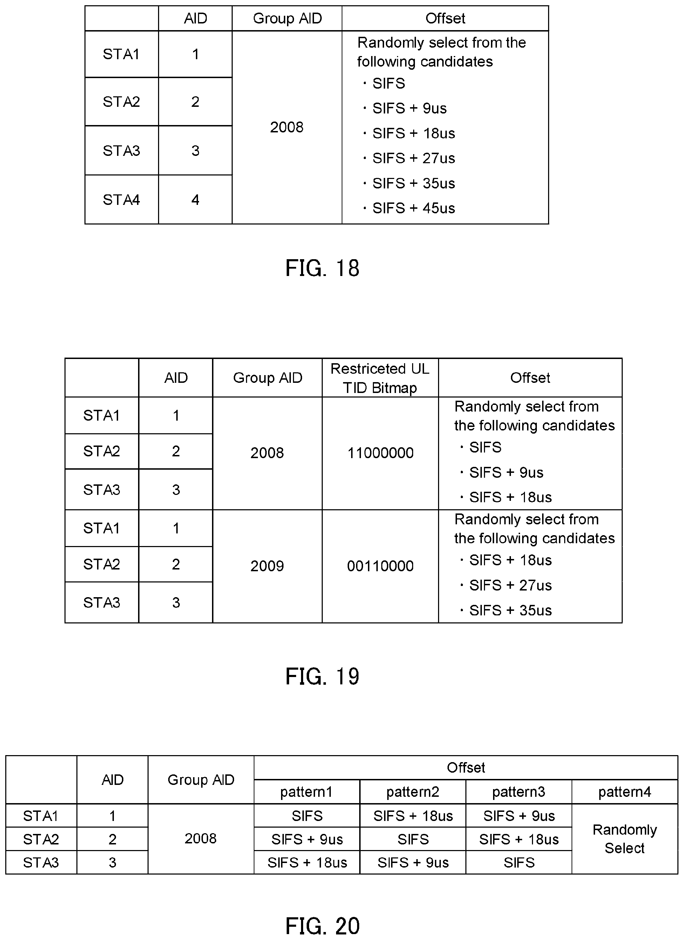

Further, as described above, in the case of the operation where terminal 200 randomly selects one transmission timing from a plurality of transmission timings, the number of patterns of transmission timings may vary depending on the number of terminals included in the terminal group. For example, the larger the number of terminals included in the terminal group, the more patterns (for example, candidates) of the timing of transmitting the UL signal may be configured. For example, in a case where the number of terminals in the terminal group is three or less, three patterns of transmission timings may be defined as illustrated in FIG. 17, and in a case where the number of terminals in the terminal group is four or more, six patterns of transmission timings may be defined as illustrated in FIG. 18. As described above, by changing the number of patterns of selectable transmission timings based on the number of terminals constituting the terminal group, it is possible to keep the transmission timing within a predetermined time and to improve fairness among terminals 200.

Further, the selectable transmission timing set may vary depending on the traffic information (for example, TID) for which transmission is permitted. For example, a transmission timing set including an earlier transmission timing may be configured for a traffic type with a higher priority (for example, traffic that requires low latency). For example, as illustrated in FIG. 19, in a case of a traffic type (11000000 in FIG. 19) with a higher priority (for example, requiring low latency), the UL transmission timing in the range of SIFS to SIFS+18us is defined, and in a case of a traffic type (00110000 in FIG. 19) with a lower priority, the UL transmission timing in the range of SIFS+18us to SIFS+35us is defined. Thus, the probability that the UL transmission timing becomes earlier increases as the priority of the traffic type becomes higher, and thus, the delay in UL transmission can be reduced.

Further, for example, AP 100 may indicate to terminal 200 whether to randomly select the transmission timing of the UL signal or to be indicated by AP 100, by including the indication in the User Info field. For example, AP 100 may generate terminal group information that specifies a random selection (pattern 4) by terminal 200 in addition to the transmission timing (pattern 1 to pattern 3) indicated to each terminal 200 in the terminal group, as illustrated in FIG. 20. For example, AP 100 may indicate any of pattern 1 to pattern 4 to terminal 200 using two bits of the User Info field.

Thus, AP 100 can indicate the UL transmission timing of each terminal 200 depending on the communication situation of each terminal 200, for example, and thus, the fairness among terminals 200 can be improved. For example, in a case where there is a difference in throughput among terminals 200, the transmission timing of terminal 200 with low throughput is advanced, so that the UL transmission of terminal 200 with low throughput can be prioritized and the throughput can be improved. Further, for example, in a case where the difference in throughput among terminals 200 is small, fairness among terminals 200 can be maintained by indicating random selection.

Note that AP 100 may indicate, to terminal 200, a timing earlier than the end timing of SIFS (for example, offset of SIFS - 6us with respect to the end timing of PPDU including Trigger frame) as the timing of transmitting the UL signal. For example, AP 100 can cause terminal 200 having a Capability of responding at a timing earlier than the end timing of SIFS, to preferentially transmit a UL signal by indicating a timing earlier than the end timing of SIFS.

Further, the indication of the transmission timing need not be included in the terminal group information. For example, the transmission timing depending on the Access Category (AC) of the traffic for which UL transmission is permitted may be defined in the standard, or may be configured in a pre-negotiation between AP 100 and terminal 200.

For example, the transmission timing depending on four differentACs (for example, Video, Voice, Best Effort, and Background) may be configured as follows based on the delay required for each AC. Since the traffic ID (TID) and the AC have a correspondence with each other in advance, AP 100 can indicate the traffic for which UL transmission is permitted with the TID, which allows terminal 200 to select the transmission timing depending on the TID.
Video: SIFS
Voice: SIFS + 9us
Best Effort: SIFS + 18us
Background: SIFS + 18us

Note that the "AID" of the AID and Group AID described in an embodiment of the present disclosure is not limited to an Association identifier configured by AP 100 for a Non-AP terminal. For example, in an embodiment of the present disclosure, the AID may indicate various IDs and values used in the AID12 subfield of the Trigger frame. Further, the AID may be referred to as a terminal ID or a Group ID. Further, the Group AID may be an ID for identifying one or more terminals 200 to which transmission of a UL signal (including Low latency traffic) is indicated by a Trigger frame. The existing frame may be used for the definition of Group AID.

The above describes an example of configuring terminal group information.

### [Indication Example of Terminal Group Information]

An exemplary method for indicating terminal group information from AP 100 to terminal 200 will be described.

The terminal group information may be indicated to a plurality of terminals 200 from AP 100 using a Management frame (for example, referred to as new Management frame) different from the existing frame, for example.

For example, the new Management frame may include a Field indicating whether terminal 200 to be indicated (transmission destination) (referred to as, for example, "Membership Status field") is included in each of a plurality of terminal groups.

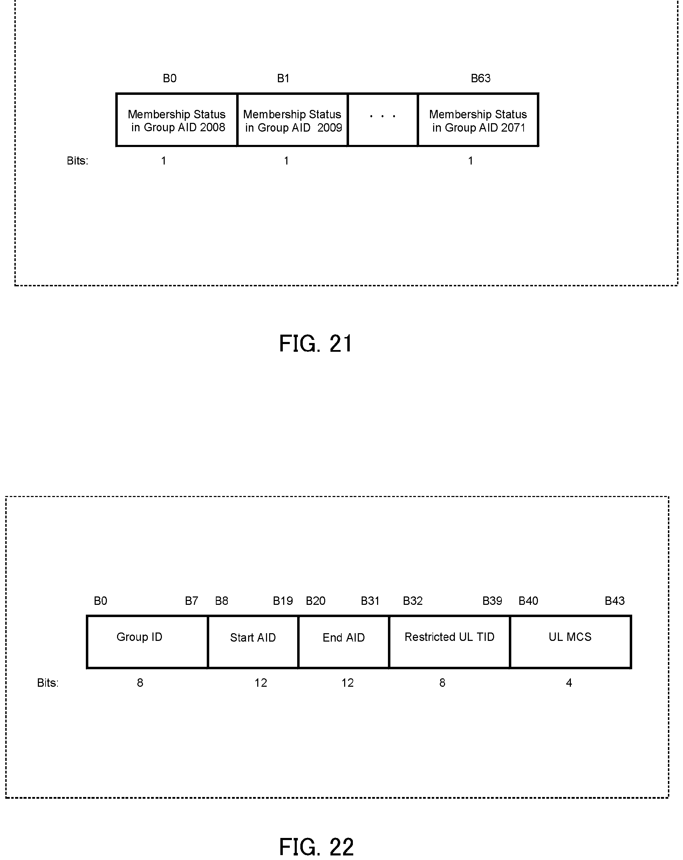

FIG. 21 illustrates an exemplary Membership Status field. In the example of FIG. 21, one bit is used for each of 64 Group AIDs (for example, AID = 2008 to 2071) to indicate whether terminal 200 of a transmission destination is included in each terminal group (for example, whether terminal 200 is a member or not). For example, in FIG. 21, when the values of B0 and B1 are 1 (members) and the bits other than B0 and B1 are 0 (non-members), Group AID = 2008, 2009 are configured for terminal 200 of the transmission destination. As described above, in the example illustrated in FIG. 21, the terminal group information is individually indicated to each terminal 200.

Further, similarly to the Membership Status, traffic information (for example, Restricted UL TID Bitmap) for which transmission is permitted may be indicated to terminal 200 using 8 bits for each of a plurality of Group AIDs.

Further, for example, as illustrated in FIG. 22, a terminal group ID (Group AID or Group ID), a set of terminal IDs belonging to the terminal group (for example, terminals whose terminal AIDs are Start AID to End AID), traffic information for which transmission is permitted (for example, Restricted UL TID), and MCS information used for a UL signal (for example, UL MCS) may be indicated to a plurality of terminals 200 collectively. As described above, in the example illustrated in FIG. 22, the terminal group information is indicated to a plurality of terminals 200 collectively. Note that the new Management frame illustrated in FIG. 22 is merely an example and is not limited thereto. For example, the new Management frame may include at least a Group ID and a set of terminal IDs (for example, Start AID and End AID).

For example, a method for individually indicating terminal group information to each terminal (for example, FIG. 21) can generate a terminal group flexibly compared to a method for indicating the terminal group information to a plurality of terminals 200 collectively (for example, FIG. 22). Further, a method for indicating the terminal group information to a plurality of terminals 200 collectively (for example, FIG. 22) can reduce the amount of signaling compared to a method for individually indicating the terminal group information to each terminal (for example, FIG. 21).

Further, for example, the existing frame may be used (or reused) for the indication of the terminal group information.

For example, the terminal group information may be indicated to terminal 200 by using the Group ID management frame of IEEE 11ac or the Restricted Access Window (RAW) Parameter Set (RPS) element format of IEEE 11ah.

Further, the terminal group information may be included in a beacon of AP 100, for example, and may be indicated to a plurality of terminals 200 connected to AP 100 as broadcast information.

Further, for example, terminal group information may be added and indicated to terminal 200 in a negotiation procedure for Low latency traffic in which a TID and a delay requirement (for example, delay budget) for the traffic of the TID are associated with each other (for example, Request/Response for new Action frame or extension of Add Block Acknowledgment (ADDBA) or the like).

The above describes an example of indication of terminal group information.

### [Exemplary Generation of Trigger Frame and Exemplary UL Transmission]

Hereinafter, the Trigger frame generation processing in AP 100 (for example, Common Info generator 103, User Info generator 104, and Trigger frame generator 105) will be described. Further, the processing of transmitting a UL signal based on the terminal group information in terminal 200 (for example, terminal group information holder 205 and radio transceiver 201) will be described.

For example, one Trigger frame may include a plurality of User Info fields (terminal-specific information) corresponding to the same Group AID (for example, identification information common to a plurality of terminals 200).

For example, as illustrated in FIG. 10, AP 100 may include transmission timing information (for example, Transmission timing information subfield) in the User Info field, and may indicate that different transmission timings are used among terminals 200 in the terminal group. For example, the transmission timing information included in the User Info field may be, for example, a pattern number for the transmission timing as illustrated in FIG. 12 or FIG. 20.

For example, in a case where AP 100 uses the terminal group information illustrated in FIG. 12, AP 100 may generate a Trigger frame including two User Info fields in which Group AID = 2008 is configured, and may transmit the Trigger frame to a plurality of terminals 200 (for example, STA1, STA2, and STA3). For example, AP 100 may indicate two different radio resources (for example, RU1 and RU2) in two User Info fields, respectively, and may indicate pattern numbers = 1 and 3 for the transmission timings, respectively.

Here, as an example, a case will be described in which STA1 does not hold traffic data indicated by terminal group information, and STA2 and STA3 hold traffic data indicated by the terminal group information. In this case, it is assumed that STA2 and STA3 attempt UL transmission. In this case, the transmission timings in RU1 and RU2 for STA2 are "SIFS + 9us" and "SIFS + 18us," respectively. Further, the transmission timings in RU1 and RU2 for STA3 are "SIFS + 18us" and "SIFS," respectively.

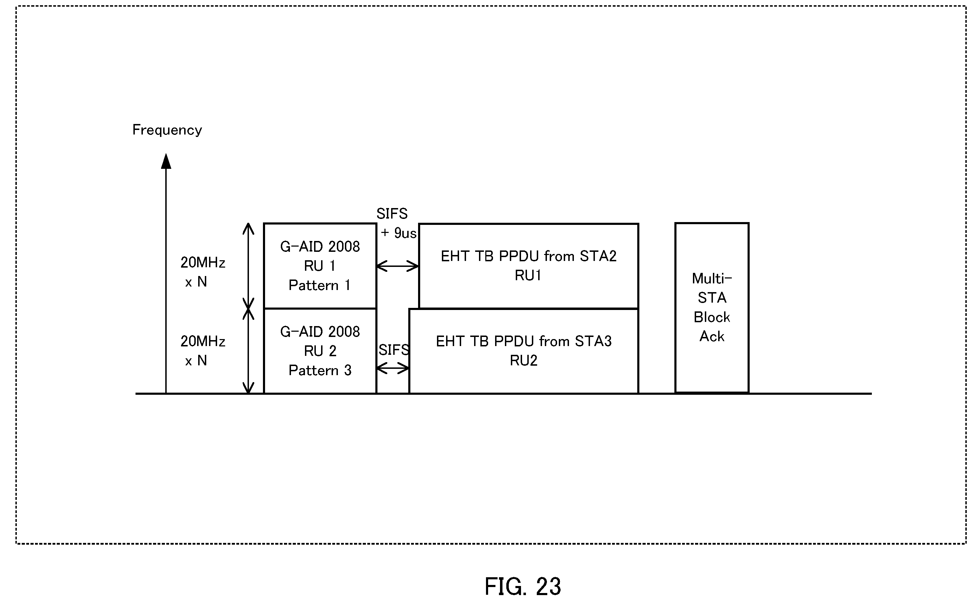

In a case where a plurality of radio resources (RUs) is indicated to STA2 and STA3 by the User Info fields corresponding to the same Group AID (2008 in FIG. 12), STA2 and STA3 may select a radio resource with a smaller (earlier) transmission timing from the plurality of radio resources. For example, in the above-described example, as illustrated in FIG. 23, STA2 may select RU1, which has the earlier transmission timing of "SIFS + 9us" between the transmission timing of "SIFS + 9us" in RU1 and the transmission timing of "SIFS + 18us" in RU2, and may transmit a UL signal (for example, EHT TB PPDU) at the transmission timing of "SIFS + 9us" in RU1. Further, as illustrated in FIG. 23, STA3 may select RU2, which has the earlier transmission timing of "SIFS" between the transmission timings of "SIFS + 18us" in RU1 and "SIFS" in RU2, and may transmit a UL signal (for example, EHT TB PPDU) at the transmission timing of "SIFS" in RU2.

Here, the carrier sensing executed before UL transmission may be executed in a subchannel including an RU to be transmitted by each terminal 200, for example. In the example illustrated in FIG. 23, STA2 may perform carrier sensing in RU1 and need not perform carrier sensing in RU2. Further, in the example illustrated in FIG. 23, STA3 may perform carrier sensing in RU2 and need not perform carrier sensing in RU1. Thus, as illustrated in FIG. 23, the result of the carrier sensing for RU1 becomes Idle even when RU2 is used for STA3, so that STA2 can transmit an uplink signal in RU1.

As described above, it is possible to reduce signal collisions among terminals 200 in radio resources limited to Low Latency Traffic, for example, and additionally, to decrease delay by frequency-multiplexing UL signals from a plurality of terminals 200.

Note that, in a case where a plurality of RUs with the same transmission timing is present in a plurality of RUs with the same Group AID, terminal 200 may select one RU randomly from the plurality of RUs with the same transmission timing, for example. The random selection can maintain the fairness of transmission opportunities.

For example, the procedure in which terminal 200 selects one RU from a plurality of RU candidates may be as follows.
(1) Terminal 200 randomly selects one RU from RU candidates that can be transmitted at a predetermined transmission timing (for example, initial value = SIFS).
(2) In a case where the carrier sense result in the band of the RU selected in step (1) is Idle, terminal 200 determines the selected RU as the transmission RU and ends the selection process. In a case where the carrier sense result is Busy, terminal 200 excludes the selected RU from the candidate RUs.
(3) In a case where a candidate RU is present, terminal 200 returns to procedure (1), and in a case where no candidate RU is present, terminal 200 proceeds to procedure (4).
(4) Terminal 200 updates the transmission timing by 1 step (for example, by adding 9us) and selects a candidate RU that can be transmitted at the updated transmission timing. In a case where a candidate RU is present, terminal 200 returns to procedure (1), and in a case where no candidate RU is present, terminal 200 proceeds to procedure (5).
(5) Terminal 200 discontinues UL transmission (when all candidate RUs for the transmission timing are Busy).

Note that terminal 200 may calculate the time length of the Packet extension (PE) field, which is the field at the end of the TB-PPDU constituting a UL signal, based on the UL transmission timing (offset amount). Thus, for example, as illustrated in FIG. 23, the end timing of the UL signal can be aligned among a plurality of terminals 200.

Further, in a case where a plurality of User Info fields that indicate the same terminal 200 is present by the individual AID and the Group AID, terminal 200 may, for example, prioritize the RU indicated by the User Info field in which the individual AID is configured, and may apply the SIFS offset to transmit the UL signal. Thus, in a case where AP 100 knows the buffer amount of terminal 200, the delay can be reduced by individually allocating a radio resource to terminal 200 by an individual AID.

Note that, in a case where a plurality of User Info fields that indicate the same terminal 200 is present by the individual AID and the Group AID, terminal 200 may, for example, prioritize the RU indicated by the User Info field in which the Group AID is configured, and may apply the offset corresponding to the terminal group information to transmit the UL signal.

Here, in a case where UL signals transmitted from a plurality of terminals 200 at different timings are frequency-multiplexed as illustrated in FIG. 23, interference of signals among terminals 200 may occur in the reception processing of AP 100. For example, in a case where OFDM modulation is applied to UL signals, the orthogonality of OFDM is possibly lost and interference possibly occurs when the transmission timing of terminal 200 exceeds the CP length.

Then, exemplary UL transmission methods (for example, Transmission Method 1 and Transmission Method 2) that reduce interference will be described below.

### <Transmission Method 1>

Transmission Method 1 is a method of configuring a guard band at the boundary of 20 MHz × N in an RU indicated by Group AID.

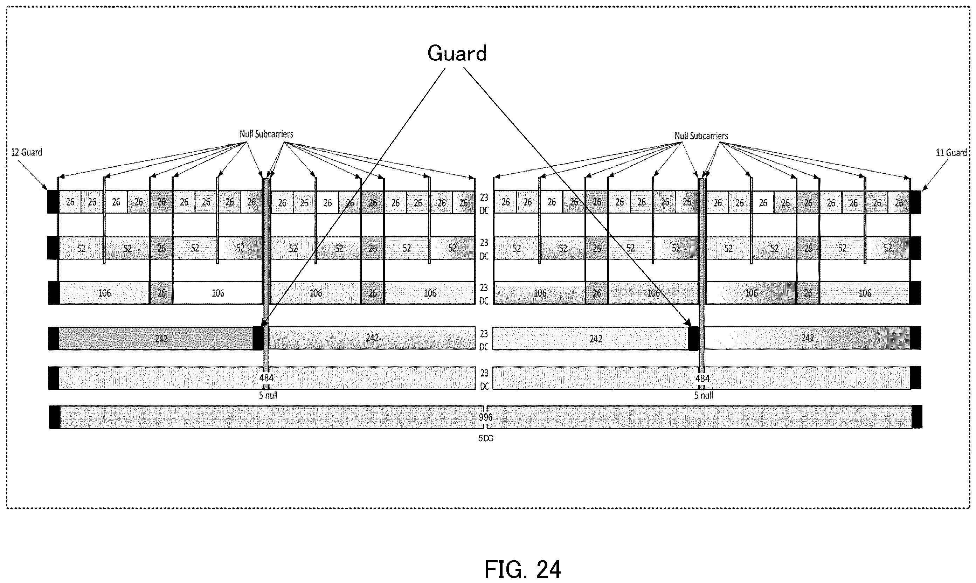

For example, as illustrated in FIG. 24, a guard band (for example, a non-transmission section) with a predetermined number of Tones may be applied to the boundary of 242 tones (20 MHz channel).

AP 100 performs reception processing per allocation RU (for example, 20 MHz × N) of each of the plurality of terminals 200, for example. At this time, in allocation RU, a guard band is configured at the boundary with another resource, and thus, AP 100 can reduce the influence of interference in a case where UL signals transmitted by a plurality of terminals 200 at different timings are frequency-multiplexed.

### <Transmission Method 2>

Transmission Method 2 is a method (for example, newly defined method) in which a TB-PPDU format including a UL signal in response to a Trigger frame including a Group AID is different from the existing TB-PPDU format.

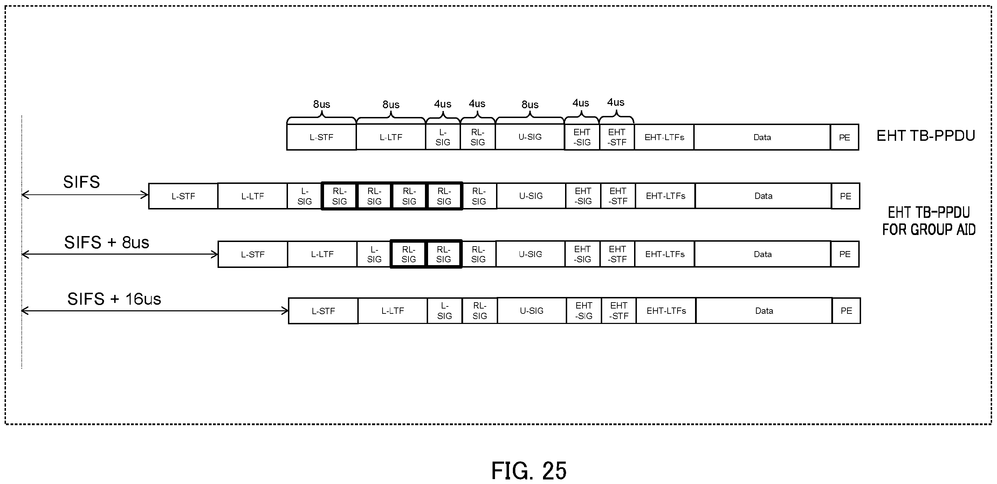

For example, as illustrated in FIG. 25, the format of a UL signal (for example, EHT TB-PPDU for Group AID) assigned by a User Info field corresponding to a Group AID (for example, identification information common to a plurality of terminals 200) and the format of a UL signal (for example, an EHT TB-PPDU) assigned by a User Info field corresponding to an AID individual to terminal 200 may be different from each other.

For example, as illustrated in FIG. 25, a PPDU format in which the number of Repetitions of a predetermined symbol in the UL signal is changed depending on the offset amount (or transmission timing) configured for each terminal 200 in the terminal group may be applied to the format of the EHT TB-PPDU for Group AID. In the example of FIG. 25, the number of Repetitions of the RL-SIG symbol may be configured to be larger as the offset amount from the end timing of the PPDU including the Trigger frame is smaller. Thus, the difference in the timing of receiving an OFDM symbol after U-SIG in AP 100 can be reduced within the CP length regardless of the offset amount, thereby preventing the occurrence of interference. Further, AP 100 can perform FFT processing on a band including all allocation RUs for a plurality of terminals 200 at once, for example.

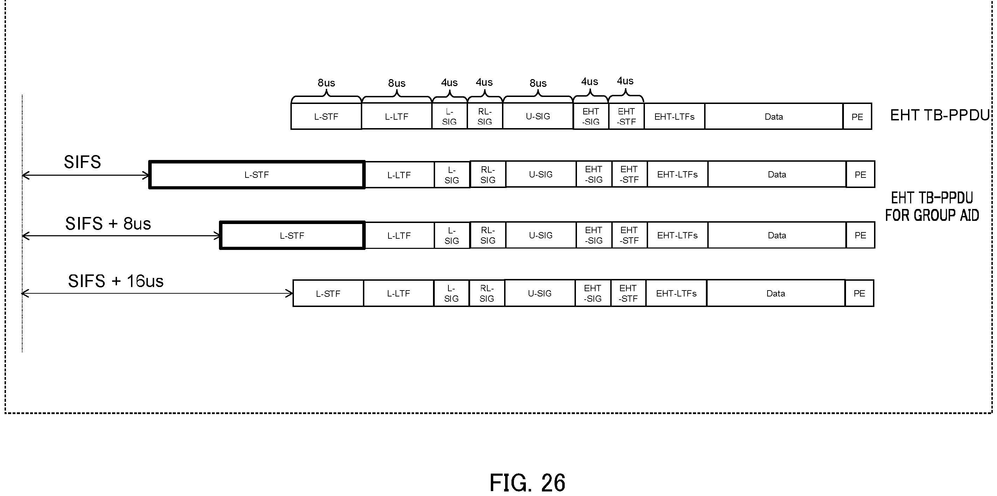

Further, for example, as illustrated in FIG. 26, a PPDU format in which the time length of a predetermined symbol (for example, L-STF) in a UL signal is changed depending on the offset amount (or transmission timing) configured for each terminal 200 in the terminal group may be applied. In the example of FIG. 26, the L-STF symbol length may be configured to be longer by repeating a predetermined sequence as the offset amount from the end timing of the PPDU including the Trigger frame is smaller. Thus, as in the example of FIG. 25, the difference in the timing of receiving an OFDM symbol after U-SIG in AP 100 can be reduced within the CP length regardless of the offset amount, thereby preventing the occurrence of interference. Further, AP 100 can perform FFT processing on a band including all allocation RUs for a plurality of terminals 200 at once, for example.

The above describes an example of a UL transmission method that reduces interference.

The 11ax and 11be each have a rule for the transmission order (or priority) of the User Info fields in the Trigger frame that the User Info fields are transmitted in the following order based on the RU indicated by each User Info field. AP 100 transmits information of the User Info fields in the Trigger frame in accordance with this rule. This allows terminal 200 to start the processing of generating a high-priority UL signal early.
1. RU allocation by AID individual to terminal 200
2. RA-RU allocation by special AID (0 or 2045)
3. Unassigned RU by special AID (2046)

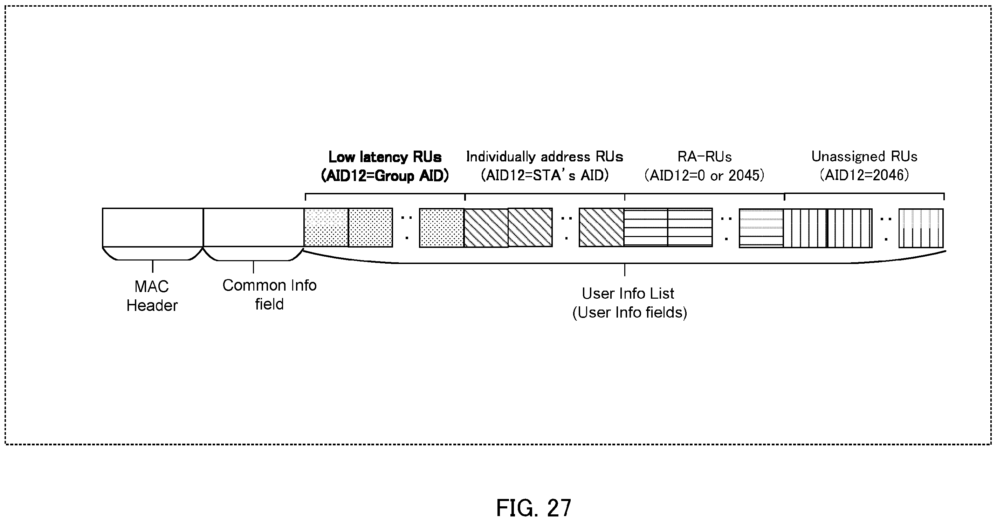

In the present embodiment, for example, the transmission order for RU allocation (for example, referred to as "RU allocation by Group AID") limited to predetermined traffic (for example, Low Latency Traffic) for a terminal group may be newly defined. For example, as illustrated in FIG. 27, the transmission order (or priority) of the User Info fields in the Trigger frame may be based on the RU indicated by each User Info field, and the transmission rule may be as follows. In the following rule, the User Info field indicating RU allocation by Group AID may be configured earlier than the User Info field indicating another RU.
1. RU allocation by Group AID
2. RU allocation by terminal-specific AID
3. RA-RU allocation by special AID (0 or 2045)
4. Unassigned RU by special AID (2046)

As described above, in the Trigger frame, the transmission order of the User Info field corresponding to the Group AID may be earlier than the transmission order of the User Info field corresponding to the AID individual to terminal 200. Thus, terminal 200 can complete the processing of decoding the User Info field including the transmission indication for Low latency Traffic early, and can start the preparation for UL transmission early. This makes it possible to reduce the delay in Low Latency Traffic.

Further, for example, in a case where a rate of occurrence of Low latency Traffic is low in an operation environment of AP 100, AP 100 may allocate an RU of 20 MHz or less to Low latency Traffic.

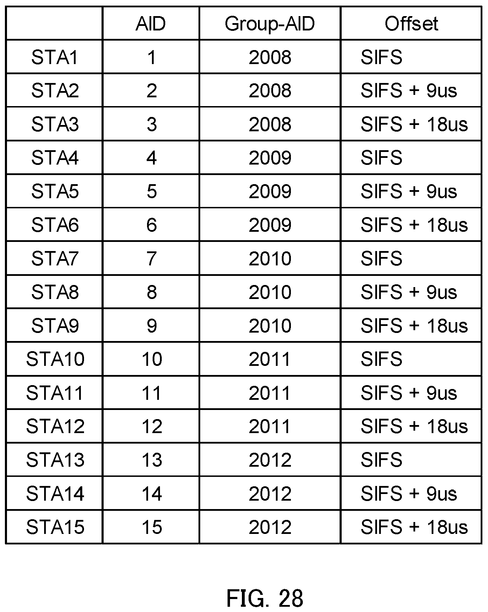

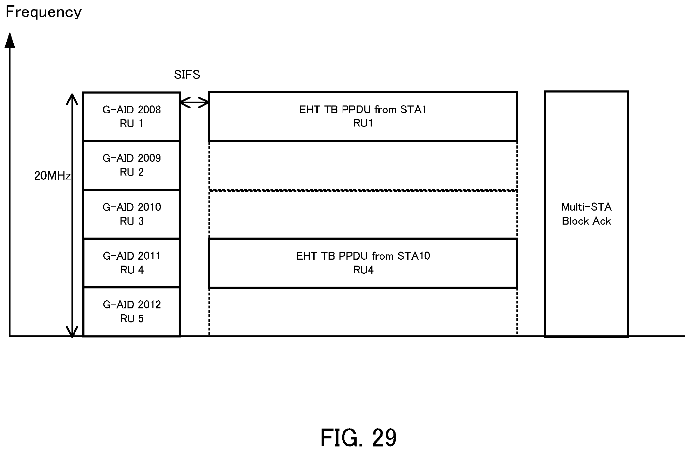

For example, a case will be described in which five terminal groups (Group AID=2008 to 2012) are generated for fifteen terminals 200 (AID=1 to 15) as illustrated in FIG. 28. For example, in a case where a rate of occurrence of Low latency Traffic is low in an operation environment of AP 100, AP 100 may schedule 15 terminals 200 (for example, 3 terminals/RU) in 5 RUs within 20 MHz, as illustrated in FIG. 29.

For example, in a case where the carrier sense immediately before UL transmission by terminal 200 is executed in units of 20 MHz, the signals of terminals 200 for which an earlier transmission timing is configured among terminals 200 having data can be frequency-multiplexed. For example, in FIG. 28, in a case where STA1 (Group AID=2008, Offset=SIFS) and STA10 (Group AID=2011, Offset=SIFS) have Low latency Traffic, STA1 and STA10 are configured with an early transmission timing compared to other terminals 200 in each terminal group (for example, Group AID=2008 and 2011). Thus, for example, as illustrated in FIG. 29, STA1 and STA10 can be frequency multiplexed in RUs of 20 MHz or less (for example, RU1 and RU4).

In a case where a rate of occurrence of Low latency Traffic is low (in a case where the number of terminals to which transmission is permitted is small), an RU of 20 MHz or less is allocated to Low latency Traffic. Consequently, for example, the transmission of another terminal 200 is prioritized, resulting in the carrier sense being Busy, which reduces the impact of not being capable of transmitting a UL signal. Thus, a large number of terminals 200 can be efficiently allocated in a small number of radio resources.

Note that, in the case of RU allocation of 20 MHz or less, the specification may be changed such that the carrier sense immediately before UL transmission by terminal 200 is executed in an RU band of 20 MHz or less. Thus, UL signals with different transmission timings can be frequency-multiplexed even in 20 MHz or less.

The above describes an example of Trigger frame generation and an example of UL transmission.

In the present embodiment, AP 100 generates a Trigger frame that indicates the allocation of a transmission resource for a UL signal of one or some of the plurality of traffic types, using an AID (Group AID) common to a plurality of terminals 200 included in a terminal group, and transmits the Trigger frame to terminal 200. Further, terminal 200 receives a Trigger frame that indicates the allocation of a transmission resource for a UL signal of one or some of the plurality of traffic types using a Group AID common to a plurality of terminals 200 included in a terminal group, and controls UL transmission based on the Trigger frame.

Thus, for example, in a resource (for example, RA-RU) that can be allocated to a terminal group, terminal 200 can perform UL transmission limited to the one or some of traffic types (for example, traffic for which low latency is required), and thus, it is possible to reduce the collision of UL signals among a plurality of terminals 200 and to reduce the delay without increasing the resource that can be allocated to the terminal group.

Therefore, according to the present embodiment, it is possible to improve the efficiency of transmitting UL signals in radio communication.

An embodiment of the present disclosure has been described above.

Note that, in the above embodiment, both the allocation of a UL transmission resource limited to UL transmission of one or some of traffic types (for example, the configuration of Restricted UL TID) and the configuration of the timing of transmitting a UL signal (for example, the configuration of Offset) are associated with terminal group information, but the present disclosure is not limited thereto. For example, the allocation of a UL transmission resource limited to UL transmission of one or some of traffic types (for example, the configuration of Restricted UL TID) may be configured, and the timing of transmitting a UL signal need not be configured. Even in this case, the collision of UL signals can be reduced and the delay can be reduced by limiting the traffic type. Alternatively, the timing of transmitting a UL signal may be configured, and the allocation of a UL transmission resource limited to UL transmission of one or some of traffic types need not be configured. Even in this case, the difference in the timing of transmitting the UL signal can reduce the collision of UL signals and reduce the delay.

Further, one or some of traffic types are not limited to traffic for which low latency is required (for example, Low latency Traffic), and may be another traffic type.

Further, parameters such as a transmission timing (Offset), the value of Restricted UL TID Bitmap, a Group AID, an AID individual to terminal 200, the number of terminals included in the terminal group, a resource size, and the number of resources are merely examples, and other values may be used.

In the above-described embodiment, the field indicating information on the terminal group is not limited to the above-described field, and the information may be mapped in another field. Further, the number of bits for indicating each control information on the terminal group is not limited to the example described above, and may be another number of bits.

Further, in the above-described embodiments, the configuration of a Trigger frame, and the configurations of a Common Info field and a User Info field in the Trigger frame are not limited to the above-described examples and may be other configurations in which, in the above-described fields, at least one of the addition of another subfield and the deletion of some subfields has been performed, for example.

Similarly, in each of the embodiments described above, the configurations of a Management frame and a UL signal (for example, EHT TB-PPDU) are not limited to the examples described above, and may be other configurations in which, for example, at least one of the addition of another field and the deletion of some fields has been performed in the configurations described above.

Further, in the above-described embodiments, a description has been given based on the format of 11be, as an example, but the format to which an exemplary embodiment of the present disclosure is applied is not limited to the format of 11be. An exemplary embodiment of the present disclosure may be applied to, for example, IEEE 802.11bd (Next Generation V2X (NGV)), which is the next-generation standard of IEEE 802.11p standard for automotive applications.

### (Supplements)

Information indicating whether terminal 200 supports the functions, operations, or processes that have been described in the above-mentioned embodiments may be transmitted (or indicated) from terminal 200 to AP 100, as capability information or a capability parameter of/for terminal 200, for example.

The capability information may include information elements (IEs) that individually indicate whether terminal 200 supports at least one of the functions, operations, or processes that have been described in the above-mentioned embodiments. Alternatively, the capability information may include information elements that indicate whether terminal 200 supports a combination of any two or more of the functions, operations, or processes that have been described in the above-mentioned embodiments. The information elements may be also simply called elements.

AP 100 may determine (or decide or assume), for example, based on the capability information received from terminal 200, the functions, operations, or processes that are supported (or not supported) by terminal 200, which is a transmission source of the capability information. AP 100 may execute operations, processes, or control in accordance with a determination result based on the capability information. By way of example, AP 100 may control a terminal group based on the capability information received from terminal 200.

Note that not supporting, by terminal 200, some of the functions, operations, or processes described in each of the above-described embodiments may be read as limitations on some of such functions, operations, or processes in terminal 200. For example, information or a request relating to such limitation may be indicated to AP 100.

The information on the capability or the limitation of terminal 200 may be defined by standards or may be implicitly indicated to AP 100 in association with information known in AP 100 or information to be transmitted to AP 100, for example.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as, e.g., a base station, an access point, and any other apparatus, device or system that communicates with or controls apparatuses such as those in the above non-limiting examples.

An access point according to an embodiment of the present disclosure includes: control circuitry, which, in operation, generates a control signal indicating, using identification information common to a plurality of terminals included in a terminal group, allocation of a transmission resource for an uplink signal of one or some of a plurality of traffic types; and transmission circuitry, which, in operation, transmits the control signal.

In the embodiment of the present disclosure, the one or some of the traffic types are traffic types for which low latency is required.

In the embodiment of the present disclosure, information on the one or some of the traffic types is associated with the identification information.

In the embodiment of the present disclosure, a size of the transmission resource is an integer multiple of 20 MHz.

In the embodiment of the present disclosure, timings of transmitting the uplink signal are different from each other, the timings being configured for the plurality of terminals in the terminal group.

In the embodiment of the present disclosure, at least one of the timings of transmitting the uplink signal is randomly selected from a plurality of candidates..

In the embodiment of the present disclosure, the timings of transmitting the uplink signal are individually configured for the plurality of terminals in the terminal group.

In the embodiment of the present disclosure, the control signal includes a plurality of pieces of terminal-specific information corresponding to the identification information common to the plurality of terminals.

In the embodiment of the present disclosure, in a case where a plurality of the transmission resources is indicated by at least one of the plurality of pieces of terminal-specific information corresponding to the same identification information among the plurality of pieces of terminal-specific information, a transmission resource with an earlier transmission timing is applied among the plurality of the transmission resources.

In the embodiment of the present disclosure, a guard band is configured at a boundary with another resource in the transmission resource for each of the plurality of terminals.

In the embodiment of the present disclosure, a first format of the uplink signal allocated by terminal-specific information corresponding to the identification information common to the plurality of terminals and a second format of the uplink signal allocated by terminal-specific information corresponding to identification information individual to a terminal are different from each other.

In the embodiment of the present disclosure, in the first format, a number of repetitions of a symbol in the uplink signal is configured based on a timing of transmitting the uplink signal.

In the embodiment of the present disclosure, in the first format, a length of a symbol in the uplink signal is configured based on a timing of transmitting the uplink signal.

In the embodiment of the present disclosure, a format of terminal-specific information corresponding to the identification information common to the plurality of terminals and a format of terminal-specific information corresponding to identification information individual to a terminal are different from each other.

In the embodiment of the present disclosure, in the control signal, a transmission order of terminal-specific information corresponding to the identification information common to the plurality of terminals is earlier than a transmission order of terminal-specific information corresponding to identification information individual to a terminal.

A terminal according to an embodiment of the present disclosure includes: reception circuitry, which, in operation, receives a control signal indicating, using identification information common to a plurality of terminals included in a terminal group, allocation of a transmission resource for an uplink signal of one or some of a plurality of traffic types; and control circuitry, which, in operation, controls uplink transmission based on the control signal.

In a communication method according to an embodiment of the present disclosure, an access point generates a control signal indicating, using identification information common to a plurality of terminals included in a terminal group, allocation of a transmission resource for an uplink signal of one or some of a plurality of traffic types, and transmits the control signal.

In a communication method according to an embodiment of the present disclosure, a terminal receives a control signal indicating, using identification information common to a plurality of terminals included in a terminal group, allocation of a transmission resource for an uplink signal of one or some of a plurality of traffic types, and controls uplink transmission based on the control signal.

The disclosure of Japanese Patent Application No. 2022-104711, filed on June 29, 2022, including the specification, drawings and abstract, is incorporated herein by reference in its entirety.

### Industrial Applicability

An exemplary embodiment of the present disclosure is useful for radio communication systems.

### Reference Signs List

100 AP
101 Terminal group generator
102 Scheduler
103 Common Info Generator
104 User Info Generator
105 Trigger frame generator
106, 208 Error correction encoder
107, 209 Modulator
108, 201 Radio transceiver
109, 202 Demodulator
110, 203 Error correction decoder
111 Terminal information holder
200 Terminal
204 Common Info acquirer
205 Terminal group information holder
206 User Info acquirer
207 Data generator

## Claims

1. An access point, comprising:
control circuitry, which, in operation, generates a control signal indicating, using identification information common to a plurality of terminals included in a terminal group, allocation of a transmission resource for an uplink signal of one or some of a plurality of traffic types; and
transmission circuitry, which, in operation, transmits the control signal.

2. The access point according to claim 1, wherein
the one or some of the traffic types are traffic types for which low latency is required.

3. The access point according to claim 1, wherein
information on the one or some of the traffic types is associated with the identification information.

4. The access point according to claim 1, wherein
a size of the transmission resource is an integer multiple of 20 MHz.

5. The access point according to claim 1, wherein
timings of transmitting the uplink signal are different from each other, the timings being configured for the plurality of terminals in the terminal group.

6. The access point according to claim 5, wherein
at least one of the timings of transmitting the uplink signal is randomly selected from a plurality of candidates.

7. The access point according to claim 5, wherein
the timings of transmitting the uplink signal are individually configured for the plurality of terminals in the terminal group.

8. The access point according to claim 1, wherein
the control signal includes a plurality of pieces of terminal-specific information corresponding to the identification information common to the plurality of terminals.

9. The access point according to claim 8, wherein
in a case where a plurality of the transmission resources is indicated by at least one of the plurality of pieces of terminal-specific information corresponding to the same identification information among the plurality of pieces of terminal-specific information, a transmission resource with an earlier transmission timing is applied among the plurality of the transmission resources.

10. The access point according to claim 5, wherein
a guard band is configured at a boundary with another resource in the transmission resource for each of the plurality of terminals.

11. The access point according to claim 1, wherein
a first format of the uplink signal allocated by terminal-specific information corresponding to the identification information common to the plurality of terminals and a second format of the uplink signal allocated by terminal-specific information corresponding to identification information individual to a terminal are different from each other.

12. The access point according to claim 11, wherein
in the first format, a number of repetitions of a symbol in the uplink signal is configured based on a timing of transmitting the uplink signal.

13. The access point according to claim 11, wherein
in the first format, a length of a symbol in the uplink signal is configured based on a timing of transmitting the uplink signal.

14. The access point according to claim 1, wherein
a format of terminal-specific information corresponding to the identification information common to the plurality of terminals and a format of terminal-specific information corresponding to identification information individual to a terminal are different from each other.

15. The access point according to claim 1, wherein
in the control signal, a transmission order of terminal-specific information corresponding to the identification information common to the plurality of terminals is earlier than a transmission order of terminal-specific information corresponding to identification information individual to a terminal.

16. A terminal, comprising:
reception circuitry, which, in operation, receives a control signal indicating, using identification information common to a plurality of terminals included in a terminal group, allocation of a transmission resource for an uplink signal of one or some of a plurality of traffic types; and
control circuitry, which, in operation, controls uplink transmission based on the control signal.

17. A communication method, comprising:
generating, by an access point, a control signal indicating, using identification information common to a plurality of terminals included in a terminal group, allocation of a transmission resource for an uplink signal of one or some of a plurality of traffic types; and
transmitting, by the access point, the control signal.

18. A communication method, comprising:
receiving, by a terminal, a control signal indicating, using identification information common to a plurality of terminals included in a terminal group, allocation of a transmission resource for an uplink signal of one or some of a plurality of traffic types; and
controlling, by the terminal, uplink transmission based on the control signal.
